(19) **Europäisches Patentamt / European Patent Office / Office européen des brevets**

(11) **EP 4 765 981 A1**

(12) **EUROPEAN PATENT APPLICATION**
published in accordance with Art. 153(4) EPC

(43) Date of publication:
**24.06.2026 Bulletin 2026/26**

(21) Application number: **24872848.7**

(22) Date of filing: **24.09.2024**

(51) International Patent Classification (IPC):
*H04W 72/0457* (2023.01)   *H04W 72/54* (2023.01)
*H04L 5/00* (2006.01)   *H04W 84/12* (2009.01)
*H04W 88/02* (2009.01)   *H04W 72/0453* (2023.01)

(52) Cooperative Patent Classification (CPC):
**H04L 5/00; H04W 72/0453; H04W 72/0457;
H04W 72/54; H04W 84/12; H04W 88/02**

(86) International application number:
**PCT/KR2024/014337**

(87) International publication number:
**WO 2025/071140 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023   KR 20230130336
21.11.2023   KR 20230162233**

(71) Applicant: **Samsung Electronics Co., Ltd.
Suwon-si, Gyeonggi-do 16677 (KR)**

(72) Inventors:
• **MIN, Hyunkee
Suwon-si, Gyeonggi-do 16677 (KR)**

• **KIM, Minsoo
Suwon-si, Gyeonggi-do 16677 (KR)**
• **KIM, Taeyong
Suwon-si, Gyeonggi-do 16677 (KR)**
• **PARK, Wonbin
Suwon-si, Gyeonggi-do 16677 (KR)**
• **BAEK, Sujeong
Suwon-si, Gyeonggi-do 16677 (KR)**
• **JEONG, Kiyeong
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE FOR WIRELESS LAN COMMUNICATION, AND OPERATING METHOD THEREOF**

(57)   An embodiment of the present disclosure relates to a device and method for wireless LAN communication in an electronic device. According to an embodiment, the electronic device includes a communication circuit, a processor, and a memory, in which, when executed by the processor, the memory causes the electronic device to perform the wireless LAN communication with the external electronic device through a channel of a first bandwidth, select a second bandwidth based on an expected throughput of each of a plurality of bandwidths supportable with the external electronic device, transmit request information related to a change to the second bandwidth to the external electronic device, and change the bandwidth for the wireless LAN communication to the second bandwidth, when it is determined that the bandwidth change of the external electronic device is completed based on data received from the external electronic device. Other embodiments may also be possible.

EP 4 765 981 A1

# FIG. 3

300

```
START
```

301 — PERFORM WIRELESS LAN COMMUNICATION
WITH EXTERNAL ELECTRONIC DEVICE

303 — IDENTIFY EXPECTED THROUGHPUT OF BANDWIDTHS

305 — SELECT BANDWIDTH FOR WIRELESS LAN COMMUNICATION

307 — IS BANDWIDTH CHANGED?  — NO

YES

309 — TRANSMIT INFORMATION RELATED TO BANDWIDTH CHANGE

311 — IDENTIFY BANDWIDTH CHANGE IN EXTERNAL ELECTRONIC DEVICE

313 — CHANGE BANDWIDTH FOR WIRELESS LAN COMMUNICATION

```
END
```

**Description**

[Technical Field]

Embodiments of the present disclosure relate to an electronic device for wireless LAN communication and an operation method thereof.

[Background Art]

A wireless local area network (WLAN) system may support wireless connection of various electronic devices such as a smartphone, a tablet personal computer (PC), or a notebook by using a specified frequency band (e.g., about 2.4 GHz band, about 5 GHz band, and/or about 6 GHz band).

The wireless LAN system may be installed not only in a private space such as a home, but also in a public space such as an airport, a train station, an office, or a department store. The wireless LAN system may be defined in the Institute of Electrical and Electronics Engineers (IEEE) 802.11 standard. For example, the IEEE 802.11 standard is continuously evolving, such as IEEE 802.11b, IEEE 802.11a, IEEE 802.11g, IEEE 802.11n, IEEE 802.11ac, IEEE 802.11ax, and IEEE 802.11be.

The above-described information may be provided as the related art for the purpose of helping to understand the present disclosure. None of the above-described contents raises any claim or determination regarding the applicability of prior art related to the present disclosure.

[Disclosure of Invention]

[Technical Problem]

The wireless LAN system may have different available channels and bandwidths depending on country-specific standards. For example, when the wireless LAN system uses a first standard (e.g., IEEE 802.11n), bandwidths of about 20 MHz and about 40 MHz may be used. When the wireless LAN system uses a second standard (e.g., IEEE 802.11ac), bandwidths of about 20 MHz, about 40 MHz, about 80 MHz, and about 160 MHz may be used. When the wireless LAN system uses a third standard (e.g., IEEE 802.11be), bandwidths of about 20 MHz, about 40 MHz, about 80 MHz, about 160 MHz, and about 320 MHz may be used.

The electronic device may be more likely to be affected by interference when using a relatively wide bandwidth than when using a relatively narrow bandwidth. For example, when a first electronic device uses a channel (e.g., channel No. 15) of about 160 MHz bandwidth in a first frequency band (e.g., about 6 GHz band) for wireless LAN communication within a specific space, and when a second electronic device uses a channel (e.g., channel No. 23) of about 80 MHz bandwidth in the first frequency band for the wireless LAN communication within the specific space, the first electronic device may have to share and use time resources with the second electronic device on a contention basis due to interference by the second electronic device. When the first electronic device uses another channel (e.g., channel No. 7) of about 80 MHz bandwidth in the first frequency band for the wireless LAN communication within the same space, the first electronic device may not be affected by the interference by the second electronic device, and thus, may use all the time resources of the corresponding channel. The electronic device may provide the wireless LAN communication at a relatively high transmission rate without being affected by the interference or with relatively little interference when using the relatively narrow bandwidth (e.g., about 80 MHz) compared to when using the relatively wide bandwidth (e.g., about 160 MHz) within the specific space.

The electronic device may consume relatively more current when using the relatively wide bandwidth than when using the relatively narrow bandwidth.

Embodiments of the present disclosure disclose a device and method for changing a bandwidth for wireless LAN communication in an electronic device.

The technical problems to be achieved by the present disclosure are not limited to the above-mentioned technical problems, and other technical problems that are not mentioned may be obviously understood by those skilled in the art to which the present disclosure pertains from the following description.

According to an embodiment, an electronic device may include a communication circuit that supports wireless LAN communication, at least one processor that is operatively connected to the communication circuit, and a memory that is operatively connected to the at least one processor. According to an embodiment, the memory may store instructions that, when executed by the at least one processor, cause the electronic device to perform the wireless LAN communication with the external electronic device through a channel of a first bandwidth via the communication circuit. According to an embodiment, the memory may store the instructions that, when executed by the at least one processor, cause the electronic device to select a second bandwidth based on an expected throughput of each of a plurality of bandwidths supportable for the wireless LAN communication with the external electronic device during the wireless LAN communication. According to an embodiment, the memory may store the instructions that, when executed by the at least one processor, cause the electronic device to transmit request information related to a change to the second bandwidth to the external electronic device through the communication circuit when the second bandwidth is different from the first bandwidth. According to an embodiment, the memory may store the instructions that, when executed by the at least one processor, cause the electronic device to change the bandwidth for the wireless LAN communication to the second bandwidth when it is determined that the bandwidth change of the external electronic device is completed based on data received from the external electronic device.

According to an embodiment, an operation method of an electronic device may include performing wireless LAN communication with the external electronic device through a channel of a first bandwidth. According to an embodiment, the operation method of an electronic device may include selecting a second bandwidth based on an expected throughput of each of a plurality of bandwidths supportable for the wireless LAN communication with the external electronic device during the wireless LAN communication. According to an embodiment, the operation method of an electronic device may include transmitting request information related to a change to the second bandwidth to the external electronic device, when the second bandwidth is different from the first bandwidth. According to an embodiment, the operation method of an electronic device may include changing the bandwidth for the wireless LAN communication to the second bandwidth, when it is determined that the bandwidth change of the external electronic device is completed based on data received from the external electronic device.

According to an embodiment, a non-transitory computer-readable storage medium (or a computer program product) storing one or more programs may be described. According to an embodiment, the one or more programs may include instructions that, when executed by a processor of an electronic device, perform an operation of performing wireless LAN communication with the external electronic device through a channel of a first bandwidth, an operation of selecting a second bandwidth based on an expected throughput of each of a plurality of bandwidths supportable for the wireless LAN communication with the external electronic device during the wireless LAN communication, an operation of transmitting request information related to a change to the second bandwidth to the external electronic device, when the second bandwidth is different from the first bandwidth, and an operation of changing the bandwidth for the wireless LAN communication to the second bandwidth, when it is determined that the bandwidth change of the external electronic device is completed based on data received from the external electronic device.

According to an embodiment of the present disclosure, when it is determined that a bandwidth change for wireless LAN communication of an external electronic device is completed in an electronic device, by changing the bandwidth for the wireless LAN communication of the electronic device, it is possible to perform (or maintain) the wireless LAN communication with the external electronic device.

According to an embodiment, by selectively changing the bandwidth for the wireless LAN communication in the electronic device based on an abnormal device list including at least one external electronic device that determines that the bandwidth change of the electronic device fails, it is possible to perform (or maintain) the wireless LAN with the external electronic device.

In addition, various effects that are directly or indirectly understood through this document may be provided.

Effects which can be achieved by the present disclosure are not limited to the above-described effects. That is, other effects that are not described may be obviously understood by those skilled in the art to which various embodiments of the present disclosure pertain from the following description.


[Brief Description of Drawings]


In connection with the description of the drawings, the same or similar reference numerals may be used for identical or similar components.


FIG. 1 is a block diagram of an electronic device in a network environment according to an embodiment.
FIG. 2 is a block diagram of an electronic device supporting wireless LAN communication according to an embodiment.
FIG. 3 is a flowchart for changing a bandwidth in the electronic device according to an embodiment.
FIG. 4A is an example of information related to changing the transmitted bandwidth in the electronic device according to an embodiment.
FIG. 4B is an example of the information related to changing the transmitted bandwidth in the electronic device according to an embodiment.
FIG. 5 is a flowchart for determining whether to change a bandwidth for wireless LAN communication in the electronic device according to an embodiment.
FIG. 6 is a flowchart for updating an abnormal list in the electronic device according to an embodiment.
FIG. 7 is an example for identifying a bandwidth change of the external electronic device in the electronic device according to an embodiment.

FIG. 8 is an example for identifying the bandwidth change of the external electronic device in the electronic device according to an embodiment.

FIG. 9 is a flowchart for changing a bandwidth based on a channel utilization rate in the electronic device according to an embodiment.

FIG. 10 is a flowchart for changing a bandwidth based on a data retransmission rate in the electronic device according to an embodiment.

FIG. 11 is a flowchart for restoring the bandwidth in the electronic device according to an embodiment.

[Mode for the Invention]

Hereinafter, various embodiments are described in detail with reference to the attached drawings.

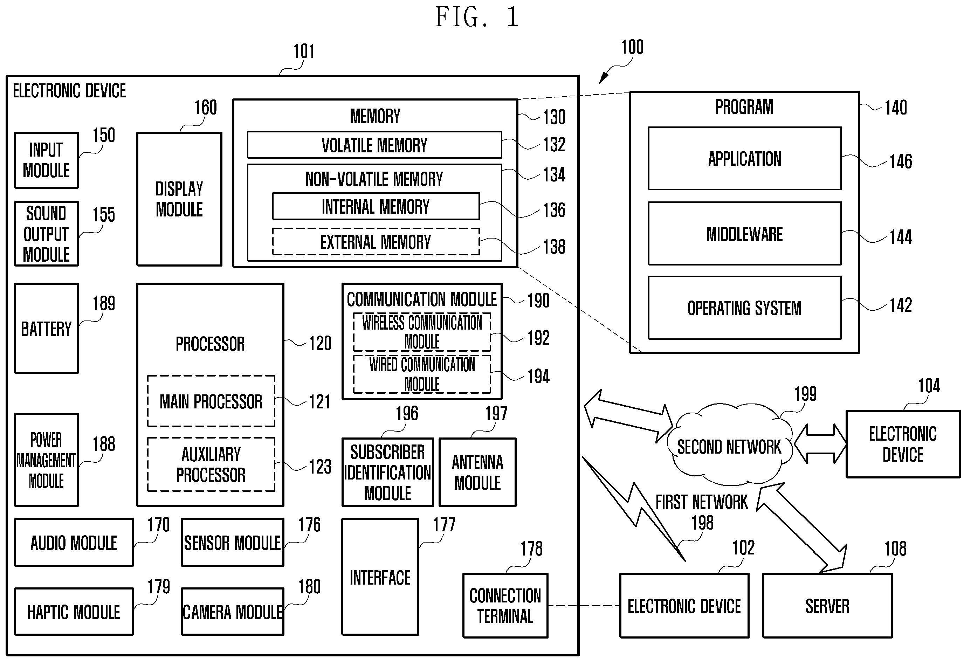

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to one embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

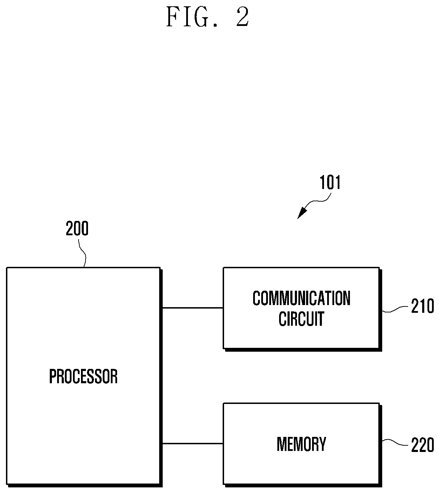

FIG. 2 is a block diagram of an electronic device supporting wireless LAN communication according to an embodiment. For example, the electronic device 101 of FIG. 2 may be at least partially similar to the electronic device 101 of FIG. 1, or may include other embodiments of the electronic device.

According to an embodiment referring to FIG. 2, the electronic device 101 may include at least one of a processor (e.g., including processing circuitry) 200, a communication circuit (or communication circuitry) 210, or a memory 220. For example, the processor 200 may be substantially the same as the processor 120 of FIG. 1, or may be included in the processor 120. The communication circuit 210 may be substantially the same as a wireless communication module 192 of FIG. 1, or may be included in a wireless communication module 192. The memory 220 may be substantially the same as the memory 130 of FIG. 1, or may be included in the memory 130. For example, the processor 200 may include at least one of an application processor or a communication processor. For example, the processor 200 may be operatively, functionally, and/or electrically connected to at least one of the communication circuit 210 or the memory 220. For example, the processor 200 may include at least one processor including a processing circuit.

According to an embodiment, the processor 200 may control the communication circuit 210 to be connected to the external electronic device (e.g., an access point (AP)) based on a wireless LAN communication scheme. For example, the processor 200 may control the communication circuit 210 to access the external electronic device based on the wireless LAN communication scheme. For example, when the processor 200 is connected to the external electronic device, the processor 200 may control the communication circuit 210 to perform wireless LAN communication with the external electronic device through a channel of a first bandwidth (or a first frequency bandwidth) allocated from the external electronic device. For example, the wireless LAN communication with the external electronic device may include a series of operations in which the electronic device 101 and the external electronic device perform at least one of transmission or reception of data.

According to an embodiment, the processor 200 may identify whether the external electronic device can change a bandwidth for the wireless LAN communication with the electronic device 101. For example, when the processor 200 is connected to the external electronic device or performs the wireless LAN communication with the external electronic device, the processor 200 may identify whether the external electronic device may change the bandwidth for the wireless LAN communication with the electronic device 101. For example, when information (or identification information) related to the external electronic device is included in an abnormal device list, the processor 200 may determine that the external electronic device cannot change the bandwidth for the wireless LAN communication. For example, when the information (or identification information) related to the external electronic device is not included in the abnormal device list, the processor 200 may determine that the external electronic device can change the bandwidth for the wireless LAN communication. For example, the information related to the external electronic device may include at least one of a basic service set identifier (BSSID) or a media access control (MAC) address. For example, the abnormal device list includes at least one external electronic device that has failed to change a bandwidth related to the wireless LAN communication or has limited bandwidth change, and may be stored in the memory 220 or an external server.

According to an embodiment, the processor 200 may select an optimal second bandwidth based on a traffic volume during the wireless LAN communication with the external electronic device. For example, when the processor 200 determines that the external electronic device can change the bandwidth for the wireless LAN communication, the processor 200 may identify an expected throughput of each of the bandwidths available for the wireless LAN communication between the electronic device 101 and the external electronic device. The processor 200 may select the optimal second bandwidth for the wireless LAN communication with the external electronic device based on the expected throughput of each of the bandwidths available for the wireless LAN communication between the electronic device 101 and the external electronic device and the traffic volume of the wireless LAN communication with the external electronic device. For example, the traffic volume may include a size of data transmitted and/or received by the electronic device 101 and the external electronic device through the wireless LAN communication during a specified first time (e.g., unit time). For example, the specified first time may include a reference time for calculating the traffic volume of the wireless LAN communication between the electronic device 101 and the external electronic device. For example, the second bandwidth may include a bandwidth having a smallest expected throughput among bandwidths having an expected throughput greater than or equal to a reference throughput set based on the traffic volume among the bandwidths available for the wireless LAN communication between the electronic device 101 and the external electronic device. For example, the reference throughput may include a sum of the traffic volume and a margin of a specified size. For example, the bandwidths available for the wireless LAN communication between the electronic device 101 and the external electronic device may include bandwidths supported by the external electronic device and the electronic device 101.

For example, the processor 200 may determine whether the wireless LAN communication with the external electronic device is possible through the channel of the first bandwidth based on a data retransmission rate during the wireless LAN communication with the external electronic device. When the processor 200 determines that the wireless LAN communication with the external electronic device is impossible through the channel of the first bandwidth, the processor 200 may select the optimal second bandwidth based on at least one of the traffic volume or a channel utilization rate. For example, the state in which the wireless LAN communication with the external electronic device through the channel of the first bandwidth is impossible may include a state in which the data retransmission rate through the wireless LAN communication with the external electronic device exceeds a specified reference retransmission rate for a specified second time. For example, the state in which the wireless LAN communication with the external electronic device through the channel of the first bandwidth is impossible may include a state in which the data retransmission rate through the wireless LAN communication with the external electronic device exceeds the specified reference retransmission rate for the specified second time in a weak electric field state. For example, the weak electric field state may indicate a state in which an electric field strength (e.g., received signal strength indication (RSSI)) for the wireless LAN communication with the electronic device 101 and the external electronic device is smaller than a specified reference electric field strength. For example, the specified second time may include a reference time set to identify whether the wireless LAN communication is possible through the first bandwidth.

According to an embodiment, when the processor 200 does not perform the wireless LAN communication while connected to the external electronic device, the processor 200 may select the optimal second bandwidth based on the channel utilization rate. For example, when the processor 200 does not perform the wireless LAN communication while connected to the external electronic device, the processor 200 may identify the expected throughput of each of the bandwidths available for the wireless LAN communication between the electronic device 101 and the external electronic device based on the channel utilization rate. The processor 200 may identify whether there is a bandwidth in which an expected throughput reversal phenomenon occurs based on the expected throughput of each of the bandwidths available for the wireless LAN communication between the electronic device 101 and the external electronic device. For example, the expected throughput reversal phenomenon may include a state in which an expected throughput of a relatively wide bandwidth is smaller than an expected throughput of a relatively narrow bandwidth. For example, the channel utilization rate may be periodically identified while connected to the external electronic device or may be identified through a scan for the wireless LAN communication.

For example, when there is at least one bandwidth in which the expected throughput reversal phenomenon has occurred, the processor 200 may select the optimal second bandwidth based on the remaining bandwidths excluding at least one bandwidth in which the expected throughput reversal phenomenon has occurred among the bandwidths available for the wireless LAN communication between the electronic device 101 and the external electronic device.

According to an embodiment, the processor 200 may determine whether to change the bandwidth for the wireless LAN communication with the external electronic device based on the optimal second bandwidth for the wireless LAN communication with the external electronic device. For example, when the first bandwidth being used for the wireless LAN communication with the external electronic device and the optimal second bandwidth for the wireless LAN communication with the external electronic device are different, the processor 200 may determine to change the bandwidth for the wireless LAN communication. For example, when the first bandwidth being used for the wireless LAN communication with the external electronic device and the optimal second bandwidth for the wireless LAN communication with the external electronic device are the same, the processor 200 may determine not to change the bandwidth for the wireless LAN communication.

According to an embodiment, when the processor 200 determines to change the bandwidth for the wireless LAN communication, the processor 200 may control the communication circuit 210 to transmit information related to the bandwidth change to the external electronic device. For example, the information related to the bandwidth change may include information related to the second bandwidth. For example, the information related to the bandwidth change may be transmitted to the external electronic device through an operating mode notification (OMN) protocol or an operating mode indication (OMI) protocol. For example, the information related to the bandwidth change may be transmitted to the external electronic device through the channel of the first bandwidth.

According to an embodiment, the processor 200 may identify whether the external electronic device changes the bandwidth for the wireless LAN communication with the electronic device 101. For example, the processor 200 may identify a bandwidth of data (or frames) received from the external electronic device for a specified third time from a time when a response signal (e.g., ACK) corresponding to the information related to the bandwidth change is received from the external electronic device. For example, when the second bandwidth is smaller than the first bandwidth, the processor 200 may identify the bandwidth of the data (or frames) received from the external electronic device while maintaining the first bandwidth for the specified third time. For example, when the second bandwidth is greater than the first bandwidth, the processor 200 may identify the bandwidth of the data (or frames) received from the external electronic device while changing to the second bandwidth for the specified third time. For example, the specified third time may include a reference time set for monitoring the bandwidth of the data received from the external electronic device to identify whether the external electronic device changes the bandwidth for the wireless LAN communication with the electronic device 101.

For example, when a specified number or more of data (or frames) of the second bandwidth is continuously received within the specified third time, the processor 200 may determine that the external electronic device changes the bandwidth for the wireless LAN communication with the electronic device 101. For example, when the specified number or more of data (or frames) of the second bandwidth is not continuously received within the specified third time, the processor 200 may determine that the external electronic device has failed to change the bandwidth for the wireless LAN communication with the electronic device 101.

For example, the processor 200 may control the communication circuit 210 to transmit data (or frames), which may generate a response from the external electronic device, to the external electronic device based on the reception of the response signal (e.g., ACK) corresponding to the information related to the bandwidth change from the external electronic device. The processor 200 may identify a bandwidth of the response signal received from the external electronic device. For example, when the second bandwidth is smaller than the first bandwidth, the processor 200 may perform the transmission of the data, which may generate the response from the external electronic device, and the reception of the response signal while maintaining the first bandwidth. For example, when the second bandwidth is greater than the first bandwidth, the processor 200 may perform the transmission of the data, which may generate the response from the external electronic device, and the reception of the response signal while the bandwidth for the wireless LAN communication with the external electronic device is changed to the second bandwidth. For example, the data (or frames), which may generate the response from the external electronic device, may include at least one of an address resolution protocol (ARP) request frame or a domain name system (DNS) query frame.

For example, when the bandwidth of the response signal received from the external electronic device is the second bandwidth, the processor 200 may determine that the external electronic device changes the bandwidth for the wireless LAN communication with the electronic device 101. For example, when the bandwidth of the response signal received from the external electronic device is not the second bandwidth, the processor 200 may determine that the external electronic device has failed to change the bandwidth for the wireless LAN communication with the electronic device 101.

For example, when the processor 200 determines that it may not be identified whether the bandwidth of the external electronic device is changed by monitoring the bandwidth of the data received from the external electronic device, the processor 200 may control the communication circuit 210 to transmit the data, which may generate the response from the external electronic device, to the external electronic device. The processor 200 may identify whether the external electronic device changes the bandwidth for the wireless LAN communication with the electronic device 101 based on the bandwidth of the response signal received from the external electronic device.

For example, when the processor 200 determines that it may not be identified whether the bandwidth of the external electronic device is changed based on the bandwidth of the response signal corresponding to the data that may generate the response from the external electronic device, the processor 200 may monitor the bandwidth of the data received from the external electronic device for the specified third time. The processor 200 may identify whether the external electronic device changes the bandwidth for the wireless LAN communication with the electronic device 101 based on the bandwidth of the data received from the external electronic device for the specified third time.

According to an embodiment, when the processor 200 determines that the external electronic device changes the bandwidth for the wireless LAN communication with the electronic device 101, the processor 200 may control the communication circuit 210 to perform the wireless LAN communication with the external electronic device through the second bandwidth. For example, when the second bandwidth is smaller than the first bandwidth, the processor 200 may control the communication circuit 210 to change the bandwidth for the wireless LAN communication with the external electronic device from the first bandwidth to the second bandwidth. For example, when the second bandwidth is greater than the first bandwidth, the processor 200 may control the communication circuit 210 to maintain the changed second bandwidth in order to identify the bandwidth change in the external electronic device. For example, the wireless LAN communication with the external electronic device through the second bandwidth may be performed based on the channel of the second bandwidth set based on the channel of the first bandwidth allocated from the external electronic device when connected to the external electronic device.

According to an embodiment, when the bandwidth is changed during the wireless LAN communication with the external electronic device, the processor 200 may control the communication circuit 210 to restore the bandwidth for the wireless LAN communication with the external electronic device to the first bandwidth based on the termination of the wireless LAN communication with the external electronic device.

According to an embodiment, when the bandwidth is changed during the wireless LAN communication with the external electronic device, the processor 200 may identify the data retransmission rate for the wireless LAN communication with the external electronic device. For example, when the processor 200 determines that the data retransmission rate is improved based on the bandwidth change, the processor 200 may control the communication circuit 210 to maintain the changed bandwidth. For example, the state in which the data retransmission rate is improved may include a state in which the data retransmission rate after the bandwidth change is lower than the data retransmission rate before the bandwidth change. For example, the state in which the data retransmission rate has decreased may include a state in which the data retransmission rate after the bandwidth change is lower than the data retransmission rate before the bandwidth change by a reference value or more.

For example, when the processor 200 determines that the data retransmission rate is not improved based on the bandwidth change, the processor 200 may control the communication circuit 210 to restore the bandwidth for the wireless LAN communication with the external electronic device to the first bandwidth. For example, the state in which the data retransmission rate is not improved may include a state in which the data retransmission rate after the bandwidth change is the same as the data retransmission rate before the bandwidth change or is higher than before the bandwidth change, or the data retransmission rate after the bandwidth change is not lower than the data retransmission rate before the bandwidth change by the reference value or more.

According to an embodiment, when the processor 200 determines that the external electronic device has failed to change the bandwidth for the wireless LAN communication with the electronic device 101, the processor 200 may update the abnormal device list based on the information related to the external electronic device. For example, the update of the abnormal device list may include a series of operations of adding the information related to the external electronic device to the abnormal device list.

According to an embodiment, the communication circuit 210 may support the wireless LAN communication between the electronic device 101 and the external electronic device (e.g., an electronic device 104 or a server 108 of FIG. 1).

According to an embodiment, the memory 220 may store various data used by at least one component (e.g., the processor 200 or the communication circuit 210) of the electronic device 101. For example, the memory 220 may store various instructions that may be individually or collectively executed by the processor 200.

According to an embodiment, the electronic device 101 may also perform re-association to change the bandwidth for the wireless LAN communication with the external electronic device. For example, when the electronic device 101 does not support the OMN protocol and the OMI protocol, the electronic device 101 may change the bandwidth for the wireless LAN communication through a re-association procedure with the external electronic device.

According to an embodiment, the electronic device 101 may selectively change the bandwidth for the wireless LAN communication with the external electronic device. For example, when the processor 200 determines that a user prefers a relatively long usage time of the electronic device 101 based on at least one of a user's usage pattern for the electronic device 101 or information related to the user, the processor 200 may determine to change the bandwidth for the wireless LAN communication with the external electronic device. For example, when the remaining battery capacity of the electronic device 101 is less than or equal to a specified reference remaining capacity, the processor 200 may determine to change the bandwidth for the wireless LAN communication with the external electronic device. For example, when the processor 200 determines to change the bandwidth for the wireless LAN communication with the external electronic device, the processor 200 may change the bandwidth for the wireless LAN communication with the external electronic device based on at least one of the traffic volume or the channel utilization rate.

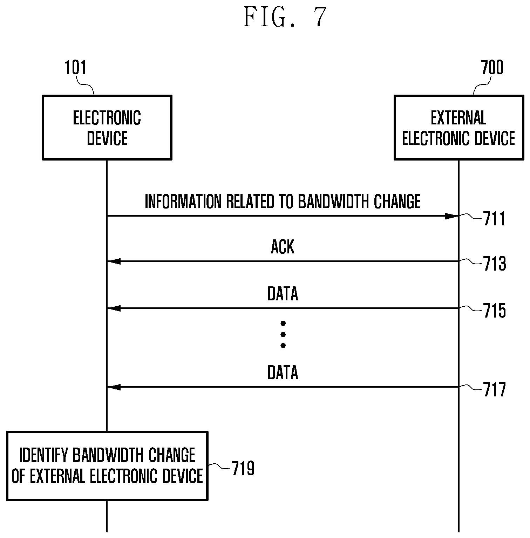

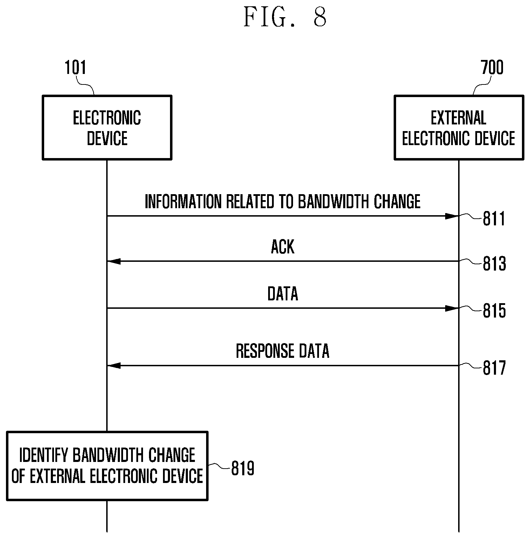

According to an embodiment, the electronic device (e.g., the electronic device 101 of FIG. 1 or 2) may include a communication circuit (e.g., a wireless communication module 192 of FIG. 1 or the communication circuit 210 of FIG. 2)) that supports the wireless LAN communication, at least one processor (e.g., the processor 120 of FIG. 1 or the processor 200 of FIG. 2)) that is operatively connected to the communication circuit, and a memory (e.g., the memory 130 of FIG. 1 or the memory 220 of FIG. 2)) that is operatively connected to the at least one processor. According to an embodiment, the memory may store instructions that, when executed by the at least one processor, cause the electronic device to perform the wireless LAN communication with the external electronic device (e.g., an external electronic device 700 of FIG. 7 or 8) through the channel of the first bandwidth via the communication circuit. According to an embodiment, the memory may store the instructions that, when executed by the at least one processor, cause the electronic device to select the second bandwidth based on the expected throughput of each of a plurality of bandwidths supportable for the wireless LAN communication with the external electronic device during the wireless LAN communication. According to an embodiment, the memory may store the instructions that, when executed by the at least one processor, cause the electronic device to transmit request information related to the change to the second bandwidth to the external electronic device through the communication circuit when the second bandwidth is different from the first bandwidth. According to an embodiment, the memory may store the instructions that, when executed by the at least one processor, cause the electronic device to change the bandwidth for the wireless LAN communication to the second bandwidth when it is determined that the bandwidth change of the external electronic device is completed based on data received from the external electronic device.

According to an embodiment, the memory may store the instructions that, when executed by at least one processor, cause the electronic device to select the second bandwidth when the information related to the external electronic device is not included in the abnormal device list.

According to an embodiment, the memory may store the instructions that, when executed by at least one processor, cause the electronic device to determine that the bandwidth change of the external electronic device is limited when the information related to the external electronic device is included in the abnormal device list.

According to an embodiment, the memory may store the instructions that, when executed by at least one processor, cause the electronic device to update the abnormal device list based on the information related to the external electronic device when it is determined that the bandwidth change of the external electronic device is not completed.

According to an embodiment, the memory may store the instructions that, when executed by at least one processor, cause the electronic device to transmit request information related to the change to the second bandwidth and then identify the bandwidth of the data received from the external electronic device. According to an embodiment, the memory may store the instructions that, when executed by at least one processor, cause the electronic device to determine that the bandwidth change of the external electronic device is completed when the specified number or more of data corresponding to the second bandwidth is continuously received for the specified time.

According to an embodiment, the memory may store the instructions that, when executed by at least one processor, cause the electronic device to change the first bandwidth to the second bandwidth and identify the bandwidth of the data received from the external electronic device based on the second bandwidth, after transmitting the request information related to the change to the second bandwidth when the second bandwidth is greater than the first bandwidth. According to an embodiment, the memory may store the instructions that, when executed by at least one processor, cause the electronic device to identify the bandwidth of the data received from the external electronic device based on the first bandwidth, after transmitting the request information related to the change to the second bandwidth when the second bandwidth is smaller than the first bandwidth.

According to an embodiment, the memory may store the instructions that, when executed by at least one processor, cause the electronic device to transmit the request information related to the change to the second bandwidth and then transmit a specified request signal to the external electronic device. According to an embodiment, the memory may store the instructions that, when executed by at least one processor, cause the electronic device to determine whether the bandwidth change of the external electronic device is completed based on the bandwidth of the response signal when the electronic device receives a response signal corresponding to the specified request signal from the external electronic device.

According to an embodiment, the specified request signal may include at least one of an address resolution protocol (ARP) request frame or a domain name system (DNS) query frame.

According to an embodiment, the memory may store the instructions that, when executed by at least one processor, cause the electronic device to restore a frequency bandwidth for the wireless LAN communication to the first frequency bandwidth when the wireless LAN communication with the external electronic device is terminated.

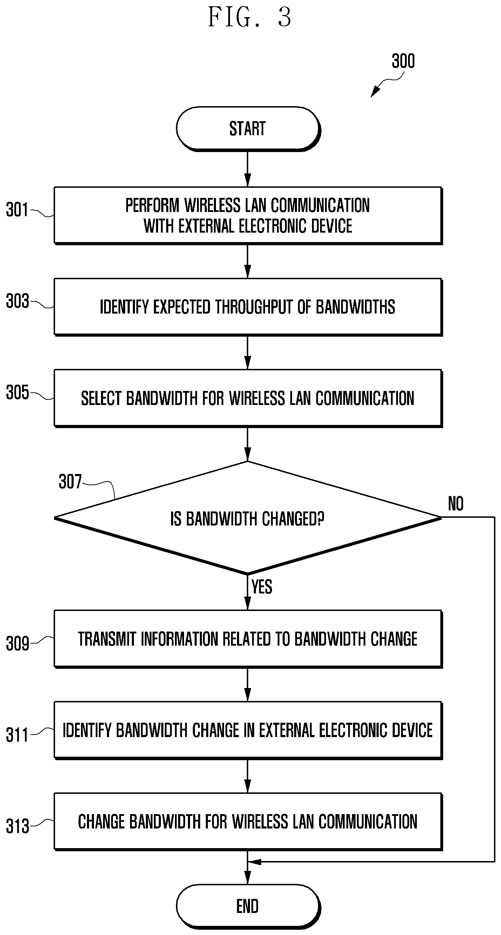

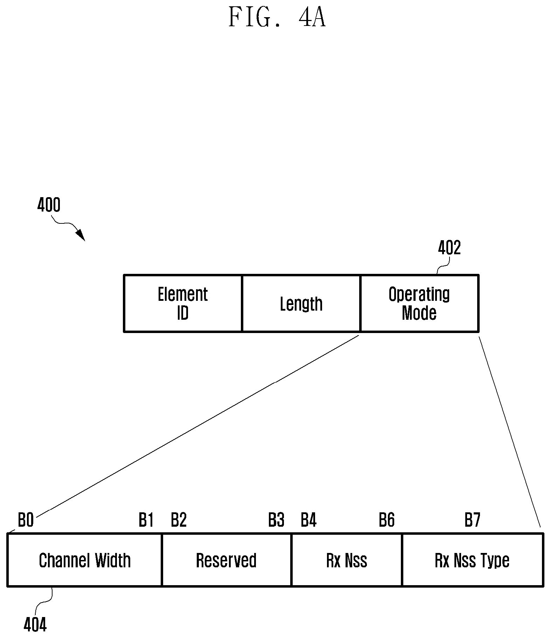

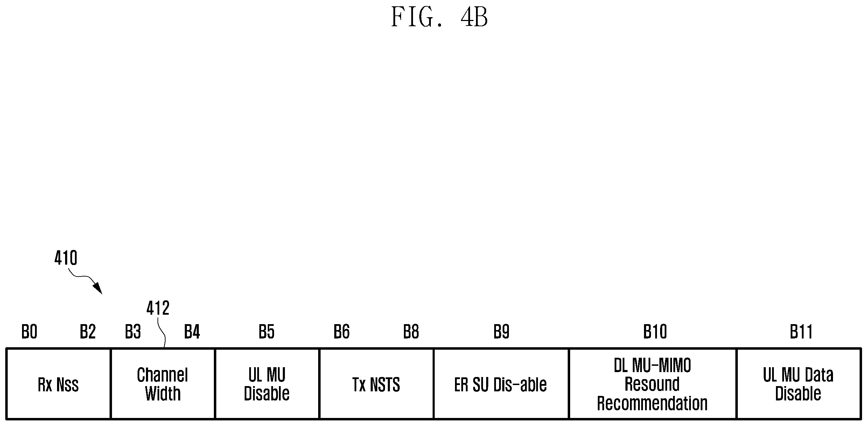

FIG. 3 is a flowchart 300 for changing the bandwidth in the electronic device according to an embodiment. In the following embodiments, each operation may be performed sequentially, but is not necessarily performed sequentially. For example, the order of each operation may be changed, and at least two operations may be performed in parallel. For example, the electronic device of FIG. 3 may be the electronic device 101 of FIG. 1 or FIG. 2. For example, at least a part of FIG. 3 may be described with reference to FIGS. 4A and 4B. FIG. 4A is an example of information related to changing the transmitted bandwidth in the electronic device according to an embodiment. FIG. 4B is an example of the information related to changing the transmitted bandwidth in the electronic device according to an embodiment.

According to an embodiment referring to FIGS. 3, 4A and 4B, the electronic device (e.g., the electronic device 101 of FIG. 1 or FIG. 2) or the processor (e.g., the processor 120 of FIG. 1 or the processor 200 of FIG. 2) may perform the wireless LAN communication with the external electronic device (e.g., an access point (AP)) in operation 301. For example, the processor 200 may control the communication circuit 210 to access the external electronic device based on the wireless LAN communication scheme. When the processor 200 accesses the external electronic device, the processor 200 may control the communication circuit 210 to perform the wireless LAN communication with the external electronic device through the channel of the first bandwidth (or the first frequency bandwidth) allocated from the external electronic device. For example, the wireless LAN communication with the external electronic device may include a series of operations in which the electronic device 101 and the external electronic device perform at least one of the transmission or reception of data.

According to an embodiment, in operation 303, the electronic device (e.g., the electronic device 101) or the processor (e.g., the processor 120 or 200) may identify the expected throughput of each of the bandwidths available for the wireless LAN communication between the electronic device 101 and the external electronic device. For example, when the wireless LAN communication with the external electronic device is connected, the processor 200 may periodically identify the expected throughput of each of the bandwidths available for the wireless LAN communication between the electronic device 101 and the external electronic device based on a specified period (e.g., about 3 seconds). For example, the bandwidths available for the wireless LAN communication between the electronic device 101 and the external electronic device may include the bandwidths supported by the external electronic device and the electronic device 101. For example, the electronic device 101 may identify the bandwidths supported by the external electronic device based on capability information of the external electronic device acquired from the external electronic device when connected to the external electronic device.

According to an embodiment, when the electronic device 101 performs the wireless LAN communication with the external electronic device, the processor 200 may identify the expected throughput of each of the bandwidths available for the wireless LAN communication between the electronic device 101 and the external electronic device based on Equation 1.

[Equation 1]

$$EstimatedThroughput_{BW} = AirtimeFraction_{BW} \times DataRate_{BW}$$

For example, EstimatedThroughput$_{BW}$ may represent the expected throughput at a specific bandwidth. AirtimeFraction$_{BW}$ may represent a ratio of time that the electronic device 101 can occupy at the specific bandwidth, and may be identified (or calculated) based on Equation 2 or Equation 3. DataRate$_{BW}$ may represent a data rate at the specific bandwidth, and may be identified (or calculated) based on Equation 4.

For example, the processor 200 may identify the ratio of the time (AirtimeFraction$_{BW}$) that the electronic device 101 can occupy at the specific bandwidth based on a channel congestion of all sub-channels included in the bandwidth, as

in Equation 2.

[Equation 2]

$$AirtimeFraction_{BW} = \left(1 - \frac{CCABusy_1}{RadioOnTime_1}\right) \times \left(1 - \frac{CCABusy_2}{RadioOnTime_2}\right) \times \cdots \times \left(1 - \frac{CCABusy_N}{RadioOnTime_N}\right)$$

For example, $CCABusy_i$ may represent the time when energy greater than or equal to a reference value is detected at an i-th sub-channel. N may represent the maximum number of sub-channels included in the specific bandwidth. $RadioOnTime_i$ may represent a time interval for measuring $CCABusy_i$ at the i-th sub-channel. For example, a sub-channel may include a sub-channel with a bandwidth of about 20 MHz.

For example, the processor 200 may determine the ratio of the time ($AirtimeFraction_{BW}$) that the electronic device 101 can occupy in the specific bandwidth based on the channel congestion of the reference sub-channel of the bandwidth, as in Equation 3.

[Equation 3]

$$AirtimeFraction_{BW} = \left(1 - \frac{CCABusy}{RadioOnTime}\right)^N$$

For example, CCAbusy may represent the time when the energy greater than or equal to the reference value is detected at a reference sub-channel. N may represent the maximum number of sub-channels included in the specific bandwidth. RadioOnTime may represent a time interval for measuring CCAbusy at the reference sub-channel. For example, the reference sub-channel may include a sub-channel (e.g., primary channel) used to transmit a beacon from the external electronic device. For example, CCABusy/RadioOnTime may represent a ratio (e.g., the channel utilization rate) at which a specific channel is occupied by other electronic devices. $\left(1 - \frac{CCABusy}{RadioOnTime}\right)$ may represent a probability that the specific channel is not congested.

For example, the processor 200 may determine the ratio of the time ($AirtimeFraction_{BW}$) that the electronic device 101 can occupy at the specific bandwidth based on the channel utilization rate received from the external electronic device.

[Equation 4]

$$DataRate_{BW} = \min(\log_2(1 + SNR, MaxBitsPerSc) \times \frac{NSS \times N_{tone}}{DSYM_{DUR}})$$

For example, SNR may represent a signal-to-noise ratio at the specific bandwidth. MaxBitsPerSc represents the maximum number of bits that may be transmitted at each subcarrier, and may be set based on a modulation and coding scheme (MCS) level. NSS may represent the number of spatial streams. $N_{tone}$ represents the number of subcarriers included in the specific bandwidth, and may be set to a different value depending on the bandwidth. $DSYM_{DUR}$ may represent a symbol interval.

According to an embodiment, when the electronic device (e.g., the electronic device 101) or the processor (e.g., the processor 120 or 200) performs the wireless LAN communication based on a time division duplexing (TDD) scheme, since the communication quality (e.g., SNR) of a downlink is similar to the communication quality of an uplink (UL), the electronic device 101 may identify (or estimate), based on Equations 1 to 4, the expected throughput of each bandwidth available for the wireless LAN communication with the external electronic device for the downlink in which the electronic device 101 receives data from the external electronic device. For example, the expected throughput of the bandwidth may be calculated based on a data rate of the downlink, as in Equation 1.

According to an embodiment, when the electronic device (e.g., the electronic device 101) or the processor (e.g., the processor 120 or 200) determines that the throughputs of the downlink and the uplink are different, the electronic device or the processor may identify (or estimate) the expected throughput of the downlink in which the electronic device 101 receives data from the external electronic device and the expected throughput of the uplink in which the electronic device 101 transmits data to the external electronic device, for each bandwidth available for the wireless LAN communication with the external electronic device. The electronic device (e.g., the electronic device 101) or the processor (e.g., the processor 120 or 200) may identify (or estimate) the expected throughput of each bandwidth used to select the optimal second bandwidth for the wireless LAN communication with the external electronic device based on the expected throughput of the downlink and the expected throughput of the uplink.

According to an embodiment, in operation 305, the electronic device (e.g., the electronic device 101) or the processor (e.g., the processor 120 or 200) may select the optimal second bandwidth for the wireless LAN communication with the external electronic device based on the expected throughput of each of the available bandwidths for the wireless LAN communication between the electronic device 101 and the external electronic device and the traffic volume for the wireless LAN communication with the external electronic device. For example, the processor 200 may select the second bandwidth for the wireless LAN communication with the external electronic device based on Equation 5. For example, the traffic volume may include the size of the data transmitted and/or received by the electronic device 101 and the external electronic device through the wireless LAN communication during the specified first time (e.g., unit time). For example, the specified first time may include the reference time for calculating the traffic volume of the wireless LAN communication between the electronic device 101 and the external electronic device.

[Equation 5]

$$\min(EstimatedThroughput_{BW}) \geq Traffirate + margin$$

For example, the bandwidths available for the wireless LAN communication between the electronic device 101 and the external electronic device may include about 20 MHz, about 40 MHz, and about 80 MHz. For example, the expected throughput of the bandwidth of about 20 MHz may be about 100 Mbps, the expected throughput of the bandwidth of about 40 MHz may be about 200 Mbps, and the expected throughput of the bandwidth of about 80 MHz may be about 400 Mbps. When the traffic volume (Traffirate) is 20 Mbps and a margin is 100 Mbps, the processor 200 may select, as the second bandwidth, a bandwidth of about 40 MHz which is the smallest bandwidth while being greater than the reference throughput (e.g., about 120 Mbps) set by the sum of the traffic volume and the margin.

According to an embodiment, in operation 307, the electronic device (e.g., the electronic device 101) or the processor (e.g., the processor 120 or 200) may determine whether to change the bandwidth for the wireless LAN communication with the external electronic device based on the optimal second bandwidth for the wireless LAN communication with the external electronic device. For example, when the first bandwidth being used for the wireless LAN communication with the external electronic device and the optimal second bandwidth for the wireless LAN communication with the external electronic device are different, the processor 200 may determine to change the bandwidth for the wireless LAN communication. For example, when the first bandwidth being used for the wireless LAN communication with the external electronic device and the optimal second bandwidth for the wireless LAN communication with the external electronic device are the same, the processor 200 may determine not to change the bandwidth for the wireless LAN communication.

According to an embodiment, when the electronic device (e.g., the electronic device 101) or the processor (e.g., the processor 120 or 200) determines not to change the bandwidth for the wireless LAN communication (e.g., 'No' in operation 307), the electronic device or the processor may terminate one embodiment for changing the bandwidth.

According to an embodiment, when the electronic device (e.g., the electronic device 101) or the processor (e.g., the processor 120 or 200) determines to change the bandwidth for the wireless LAN communication (e.g., 'Yes' in operation 307), in operation 309, the electronic device or the processor may transmit the information related to the change of the bandwidth to the external electronic device. For example, when the processor 200 supports the operating mode notification (OMN) protocol, the processor 200 may control the communication circuit 210 to set a channel width field 404 included in an 'operating mode' field 402 of a frame 400 including the OMN element as illustrated in FIG. 4A to a value corresponding to the second bandwidth and transmit the channel width field 404 to the external electronic device. For example, when the processor 200 supports the operating mode indication (OMI) protocol, the processor 200 may control the communication circuit 210 to set a channel width field 412 of a frame 410 including an operating mode control subfield as illustrated in FIG. 4B to the value corresponding to the second bandwidth and transmit the channel width field 412 to the external electronic device. For example, the information related to the bandwidth change may be transmitted to the external electronic device through the channel of the first bandwidth.

According to an embodiment, in operation 311, the electronic device (e.g., the electronic device 101) or the processor (e.g., processor 120 or 200) may identify the bandwidth change for the wireless LAN communication with the electronic device 101 in the external electronic device. For example, the processor 200 may identify the bandwidth of the data (or frames) received from the external electronic device for the specified third time from the time when the response signal (e.g., ACK) corresponding to the information related to the bandwidth change is received from the external electronic device. For example, when the second bandwidth is smaller than the first bandwidth, the processor 200 may identify the bandwidth of the data (or frames) received from the external electronic device while maintaining the first bandwidth for the specified third time. For example, when the second bandwidth is greater than the first bandwidth, the processor 200 may identify the bandwidth of the data (or frames) received from the external electronic device while changing to the second bandwidth for the specified third time.

For example, when the specified number or more of data (or frames) of the second bandwidth is continuously received within the specified third time, the processor 200 may determine that the external electronic device changes the bandwidth for the wireless LAN communication with the electronic device 101.

For example, the processor 200 may control the communication circuit 210 to transmit the data (or frames), which may generate the response from the external electronic device, to the external electronic device based on the reception of the response signal (e.g., ACK) corresponding to the information related to the bandwidth change from the external electronic device. The processor 200 may identify the bandwidth of the response signal received from the external electronic device. For example, when the second bandwidth is smaller than the first bandwidth, the processor 200 may perform the transmission of the data, which may generate the response from the external electronic device, and the reception of the response signal while maintaining the first bandwidth. For example, when the second bandwidth is greater than the first bandwidth, the processor 200 may perform the transmission of the data, which may generate the response from the external electronic device, and the reception of the response signal while the bandwidth for the wireless LAN communication with the external electronic device is changed to the second bandwidth. For example, the data (or frames), which may generate the response from the external electronic device, may include at least one of the address resolution protocol (ARP) request frame or the domain name system (DNS) query frame.

For example, when the bandwidth of the response signal received from the external electronic device is the second bandwidth, the processor 200 may determine that the external electronic device changes the bandwidth for the wireless LAN communication with the electronic device 101.

According to an embodiment, in operation 313, the electronic device (e.g., the electronic device 101) or the processor (e.g., the processor 120 or 200) may change the bandwidth for the wireless LAN communication with the external electronic device to the second bandwidth based on the determination that the external electronic device changes the bandwidth for the wireless LAN communication with the electronic device 101. For example, when the second bandwidth is smaller than the first bandwidth, the processor 200 may control the communication circuit 210 to change the bandwidth for the wireless LAN communication with the external electronic device from the first bandwidth to the second bandwidth. For example, when the second bandwidth is greater than the first bandwidth, the processor 200 may control the communication circuit 210 to maintain the changed second bandwidth in order to identify the bandwidth change in the external electronic device.

According to an embodiment, the electronic device 101 may perform the wireless LAN communication with the external electronic device through the channel of the second bandwidth. For example, the wireless LAN communication with the external electronic device through the second bandwidth may be performed based on the channel of the second bandwidth set based on the channel of the first bandwidth allocated from the external electronic device when connected to the external electronic device.

According to an embodiment, when the wireless LAN communication with the external electronic device is terminated while the electronic device 101 changes the bandwidth for the wireless LAN communication with the external electronic device to the second bandwidth, the electronic device 101 may selectively restore the bandwidth for the wireless LAN communication with the external electronic device to the first bandwidth. For example, when the wireless LAN communication with the external electronic device is terminated, the electronic device 101 may compare the throughputs (or expected throughputs) of the first bandwidth and the second bandwidth. For example, when the throughput of the second bandwidth is higher than the throughput of the first bandwidth, the electronic device 101 may maintain the bandwidth for the wireless LAN communication with the external electronic device as the second bandwidth while the wireless LAN communication with the external electronic device is terminated. For example, when the throughput of the first bandwidth is higher than the throughput of the second bandwidth, the electronic device 101 may restore the bandwidth for the wireless LAN communication with the external electronic device to the first bandwidth while the wireless LAN communication with the external electronic device is terminated.

According to an embodiment, when the wireless LAN communication with the external electronic device is terminated while the bandwidth for the wireless LAN communication with the external electronic device is changed to the second bandwidth, the electronic device 101 may restore the bandwidth for the wireless LAN communication with the external electronic device to the first bandwidth regardless of the throughputs (or the expected throughputs) of the first bandwidth and the second bandwidth.

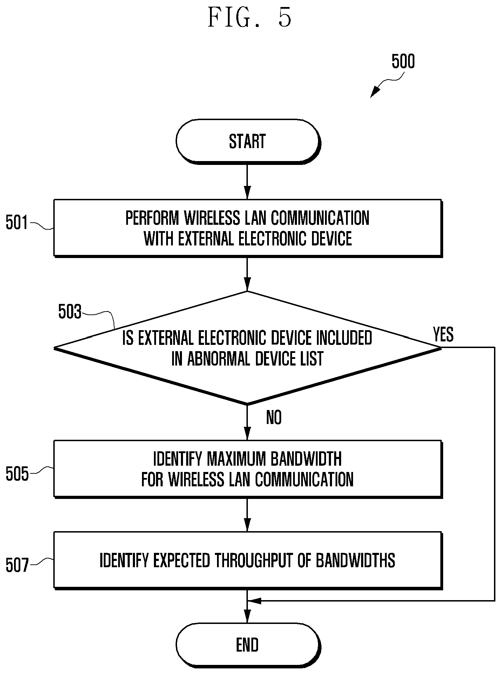

FIG. 5 is a flowchart 500 for determining whether to change the bandwidth for wireless LAN communication in the electronic device according to an embodiment. For example, at least a part of FIG. 5 may include detailed operations of operations 301 and 303 of FIG. 3. In the following embodiments, each operation may be performed sequentially, but is not necessarily performed sequentially. For example, the order of each operation may be changed, and at least two operations may be performed in parallel. For example, the electronic device of FIG. 5 may be the electronic device 101 of FIG. 1 or FIG. 2.

According to an embodiment referring to FIG. 5, in operation 501, the electronic device (e.g., the electronic device 101 of FIG. 1 or FIG. 2) or the processor (e.g., the processor 120 of FIG. 1 or the processor 200 of FIG. 2) may perform the connection to the external electronic device (e.g., AP) based on the wireless LAN communication scheme. For example, the connection to the external electronic device may include a series of operations for accessing the external electronic device based on the wireless LAN communication scheme.

According to an embodiment, in operation 503, the electronic device (e.g., the electronic device 101) or the processor (e.g., the processor 120 or 200) may identify whether the external electronic device is included in the abnormal device list. For example, the abnormal device list may include at least one external electronic device that has failed to continuously change the bandwidth related to the wireless LAN communication for the specified time or has limited bandwidth change, and may be stored in the memory 220 or the external server.

According to an embodiment, the electronic device (e.g., the electronic device 101) or the processor (e.g., the processor 120 or 200) may terminate an embodiment for determining whether to change the bandwidth for the wireless LAN communication when the external electronic device is included in the abnormal device list (e.g., 'Yes' in operation 503). For example, when the information related to the external electronic device is included in the abnormal device list, the processor 200 may determine that the external electronic device may not change the bandwidth for the wireless LAN communication with the electronic device 101. For example, the information related to the external electronic device may include at least one of a basic service set identifier (BSSID) or a media access control (MAC) address.

According to an embodiment, when the external electronic device is not included in the abnormal device list (e.g., 'No' in operation 503), in operation 505, the electronic device (e.g., the electronic device 101) or the processor (e.g., the processor 120 or 200) may identify a maximum bandwidth available for the wireless LAN communication between the electronic device 101 and the external electronic device. For example, when the information related to the external electronic device is not included in the abnormal device list, the processor 200 may determine that the external electronic device may change the bandwidth for the wireless LAN communication with the electronic device 101. For example, the processor 200 may identify the bandwidths supported by the external electronic device based on the capability information of the external electronic device acquired from the external electronic device when connected to the external electronic device based on the determination that the external electronic device may change the bandwidth for wireless LAN communication with the electronic device 101. The processor 200 may identify the maximum bandwidth among the bandwidths supported by the external electronic device and the electronic device 101. For example, the maximum bandwidth may include any one value of about 20 MHz, about 40 MHz, about 80 MHz, about 160 MHz, and about 320 MHz. For example, the maximum bandwidth represents the largest bandwidth among the bandwidths that the electronic device 101 can support, and the electronic device 101 may support all bandwidths less than or equal to the maximum bandwidth.

According to an embodiment, in operation 507, the electronic device (e.g., electronic device 101) or the processor (e.g., processor 120 or 200) may identify the expected throughput of each of the bandwidths available for the wireless LAN communication between the electronic device 101 and the external electronic device. For example, the processor 200 may identify the expected throughput of each of the bandwidths available for the wireless LAN communication between the electronic device 101 and the external electronic device during the wireless LAN communication with the external electronic device. For example, the expected throughput may be calculated based on Equation 1. For example, the bandwidths available for the wireless LAN communication between the electronic device 101 and the external electronic device may include bandwidths smaller than the maximum bandwidth available for the wireless LAN communication between the electronic device 101 and the external electronic device.

According to an embodiment, the electronic device 101 may perform the wireless LAN communication with the external electronic device included in the abnormal device list. When the electronic device 101 does not transmit or receive data to and from the external electronic device for the specified time, the electronic device may identify whether the external electronic device may change the bandwidth. When the electronic device 101 determines that the external electronic device changes the bandwidth, the electronic device 101 may update the abnormal device list so that the external electronic device is removed from the abnormal device list. When the electronic device 101 determines that the external electronic device has failed to change the bandwidth, the electronic device 101 may maintain the abnormal device list. For example, the electronic device 101 may transmit the information related to the change to the specified bandwidth to the external electronic device and identify whether the external electronic device changes to the specified bandwidth. For example, the specified bandwidth may include an arbitrary bandwidth or a bandwidth selected based on the expected throughput.

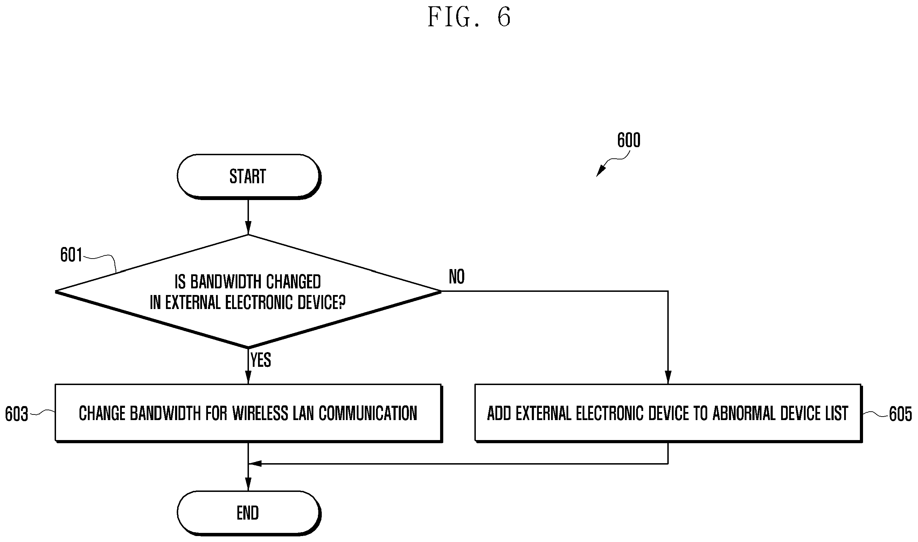

FIG. 6 is a flowchart 600 for updating the abnormal list in the electronic device according to an embodiment. For example, at least a part of FIG. 6 may include detailed operations of operations 311 and 313 of FIG. 3. In the following embodiments, each operation may be performed sequentially, but is not necessarily performed sequentially. For example, the order of each operation may be changed, and at least two operations may be performed in parallel. For example, the electronic device of FIG. 6 may be the electronic device 101 of FIG. 1 or FIG. 2.

According to an embodiment referring to FIG. 6, when the electronic device (e.g., the electronic device 101 of FIG. 1 or FIG. 2) or the processor (e.g., the processor 120 of FIG. 1 or the processor 200 of FIG. 2) transmits the information related to the bandwidth change (e.g., operation 309 of FIG. 3), in operation 601, the electronic device or the processor may identify whether the external electronic device changes the bandwidth for the wireless LAN communication with the electronic device 101.

For example, the processor 200 may identify the bandwidth of the data (or frames) received from the external electronic device for the specified third time from the time when the response signal (e.g., ACK) corresponding to the information related to the bandwidth change is received from the external electronic device. For example, when the second bandwidth is smaller than the first bandwidth, the processor 200 may identify the bandwidth of the data (or frames) received from the external electronic device while maintaining the first bandwidth for the specified third time. For example, when the second bandwidth is greater than the first bandwidth, the processor 200 may identify the bandwidth of the data (or frames) received from the external electronic device while changing to the second bandwidth for the specified third time. For example, the specified third time may include the reference time set for monitoring the bandwidth of the data received from the external electronic device to identify whether the external electronic device changes the bandwidth for the wireless LAN communication with the electronic device 101.

For example, when the specified number or more of data (or frames) of the second bandwidth is continuously received within the specified third time, the processor 200 may determine that the external electronic device changes the bandwidth for the wireless LAN communication with the electronic device 101. For example, when the specified number or more of data (or frames) of the second bandwidth is not continuously received within the specified third time, the processor 200 may determine that the external electronic device has failed to change the bandwidth for the wireless LAN communication with the electronic device 101.

For example, the processor 200 may control the communication circuit 210 to transmit the data (or frames), which may generate the response from the external electronic device, to the external electronic device based on the reception of the response signal (e.g., ACK) corresponding to the information related to the bandwidth change from the external electronic device. The processor 200 may identify the bandwidth of the response signal received from the external electronic device. For example, when the second bandwidth is smaller than the first bandwidth, the processor 200 may perform the transmission of the data, which may generate the response from the external electronic device, and the reception of the response signal while maintaining the first bandwidth. For example, when the second bandwidth is greater than the first bandwidth, the processor 200 may perform the transmission of the data, which may generate the response from the external electronic device, and the reception of the response signal while the bandwidth for the wireless LAN communication with the external electronic device is changed to the second bandwidth. For example, the data (or frames), which may generate the response from the external electronic device, may include at least one of the address resolution protocol (ARP) request frame or the domain name system (DNS) query frame.

For example, when the bandwidth of the response signal received from the external electronic device is the second bandwidth, the processor 200 may determine that the external electronic device changes the bandwidth for the wireless LAN communication with the electronic device 101. For example, when the bandwidth of the response signal received from the external electronic device is not the second bandwidth, the processor 200 may determine that the external electronic device has failed to change the bandwidth for the wireless LAN communication with the electronic device 101.

For example, when the processor 200 determines that it may not be identified whether the bandwidth of the external electronic device is changed by monitoring the bandwidth of the data received from the external electronic device, the processor 200 may control the communication circuit 210 to transmit the data, which may generate the response from the external electronic device, to the external electronic device. The processor 200 may identify whether the external electronic device changes the bandwidth for the wireless LAN communication with the electronic device 101 based on the bandwidth of the response signal received from the external electronic device.

For example, when the processor 200 determines that it may not be identified whether the bandwidth of the external electronic device is changed based on the bandwidth of the response signal corresponding to the data that may generate the response from the external electronic device, the processor 200 may monitor the bandwidth of the data received from the external electronic device for the specified third time. The processor 200 may identify whether the external electronic device changes the bandwidth for the wireless LAN communication with the electronic device 101 based on the bandwidth of the data received from the external electronic device for the specified third time.

According to an embodiment, when it is determined that the external electronic device changes the bandwidth for the wireless LAN communication with the electronic device 101 (e.g., 'Yes' in operation 601), in operation 603, the electronic device (e.g., the electronic device 101) or the processor (e.g., the processor 120 or 200) may change the bandwidth for the wireless LAN communication with the external electronic device to the second bandwidth. For example, when the second bandwidth is smaller than the first bandwidth, the processor 200 may control the communication circuit 210 to change the bandwidth for the wireless LAN communication with the external electronic device from the first bandwidth to the second bandwidth. For example, when the second bandwidth is greater than the first bandwidth, the processor 200 may control the communication circuit 210 to maintain the changed second bandwidth in order to identify the bandwidth change in the external electronic device. For example, the processor 200 may control the communication circuit 210 to perform the wireless LAN communication with the external electronic device through the channel of the second bandwidth based on the change to the second bandwidth. For example, the channel of the second bandwidth may be set based on the channel of the first bandwidth allocated from the external electronic device when connected to the external electronic device.

According to an embodiment, when it is determined that the external electronic device does not change the bandwidth for the wireless LAN communication with the electronic device 101 (e.g., 'No' in operation 601), in operation 605, the electronic device (e.g., the electronic device 101) or the processor (e.g., the processor 120 or 200) may add the external electronic device to the abnormal device list. For example, the processor 200 may add the information related to the external electronic device to the abnormal device list. For example, the information related to the external electronic device may include at least one of the basic service set identifier (BSSID) or the media access control (MAC) address. For example, when the processor 200 changes the bandwidth for the wireless LAN communication with the external electronic device to the second bandwidth based on the second bandwidth that is greater than the first bandwidth, the processor 200 may restore the bandwidth for the wireless LAN communication with the external electronic device to the first bandwidth based on the determination that the external electronic device has failed to change the bandwidth for the wireless LAN communication with the electronic device 101.

FIG. 7 is an example for identifying the bandwidth change of the external electronic device in the electronic device according to an embodiment.

According to an embodiment referring to FIG. 7, when the electronic device 101 determines that the bandwidth is changed during the wireless LAN communication with the external electronic device 700, the electronic device 101 may transmit the information related to the change of the bandwidth to the external electronic device 700 (operation 711). For example, the electronic device 101 may transmit the information related to the change of the bandwidth to the external electronic device 700 through the frame 400 of the OMN protocol of FIG. 4A or the frame 410 of the OMI protocol of FIG. 4B. For example, the frame 400 of the OMN protocol may have the channel width field 404 included in the 'operating mode' field 402 set to the value corresponding to the second bandwidth. For example, the frame 410 of the OMI protocol may have the channel width field 412 set to the value corresponding to the second bandwidth. For example, the second bandwidth may include a bandwidth to be changed for the wireless LAN communication in the electronic device 101.

According to an embodiment, the external electronic device 700 may transmit the response signal (e.g., ACK) corresponding to the reception of the information related to the bandwidth change to the electronic device 101 based on the reception of the information related to the bandwidth change (operation 713). For example, when the external electronic device 700 decodes the information related to the bandwidth change, the external electronic device 700 may transmit a positive response signal (e.g., ACK) to the electronic device 101. For example, when the external electronic device 700 has failed to decode the information related to the bandwidth change, the external electronic device 700 may transmit a negative response signal (e.g., NACK) to the electronic device 101 or limit the transmission of the response signal corresponding to the reception of the information related to the bandwidth change.

According to an embodiment, the electronic device 101 may monitor the data (or frames) received from the external electronic device 700 for the specified third time based on the reception of the response signal (e.g., ACK) corresponding to the information related to the bandwidth change from the external electronic device 700 (operations 715 and 717). For example, the electronic device 101 may identify the bandwidth of the data (or frames) received from the external electronic device 700 for the specified third time. For example, when the electronic device 101 reduces the bandwidth for the wireless LAN communication, the electronic device 101 may identify the bandwidth of the data (or frames) received from the external electronic device 700 while maintaining the first bandwidth for the specified third time. For example, when the electronic device 101 expands the bandwidth for the wireless LAN communication, the electronic device 101 may identify the bandwidth of the data (or frames) received from the external electronic device 700 while changing (or expanding) the bandwidth for the wireless LAN communication for the specified third time. For example, the specified third time may include the reference time set for monitoring the bandwidth of the data received from the external electronic device 700 to identify whether the external electronic device 700 changes the bandwidth for the wireless LAN communication with the electronic device 101. For example, the first bandwidth may include a bandwidth set for the wireless LAN communication based on the access of the electronic device 101 to the external electronic device 700. For example, the first bandwidth may include a maximum bandwidth among the bandwidths supported by the electronic device 101 and the external electronic device 700.

According to an embodiment, when the electronic device 101 continuously receives the specified number or more of data (or frames) of the second bandwidth or a bandwidth smaller than the second bandwidth within the specified third time, the electronic device 101 may determine that the external electronic device 700 changes the bandwidth for the wireless LAN communication with the electronic device 101 (operation 719). For example, the electronic device 101 may change the bandwidth for the wireless LAN communication with the external electronic device 700 to the second bandwidth based on the determination that the external electronic device 700 changes the bandwidth for the wireless LAN communication with the electronic device 101. The electronic device 101 may perform the wireless LAN communication with the external electronic device 700 through the channel of the second bandwidth. For example, the change to the second bandwidth may include a series of operations of changing the bandwidth for the wireless LAN communication with the external electronic device 700 to the second bandwidth when reducing the bandwidth for the wireless LAN communication. For example, the change to the second bandwidth may include a series of operations of maintaining the changed second bandwidth to identify the bandwidth change in the external electronic device 700 when expanding the bandwidth for the wireless LAN communication.

According to an embodiment, when the electronic device 101 does not continuously receive the specified number or more of data (or frames) of the second bandwidth or the bandwidth smaller than the second bandwidth for the specified third time, the electronic device 101 may determine that the external electronic device 700 has failed to change the bandwidth for the wireless LAN communication with the electronic device 101. For example, when the electronic device 101 determines that the external electronic device 700 has failed to change the bandwidth for the wireless LAN communication with the electronic device 101, the electronic device 101 may add the information related to the external electronic device 700 to the abnormal device list. For example, the state in which the specified number or more of data (or frames) of the second bandwidth or the bandwidth smaller than the second bandwidth is not continuously received may include a state in which at least one data of the bandwidth greater than the second bandwidth is received within the specified third time.

FIG. 8 is an example for identifying the bandwidth change of the external electronic device in the electronic device according to an embodiment.

According to an embodiment referring to FIG. 8, when the electronic device 101 determines that the bandwidth is changed during the wireless LAN communication with the external electronic device 700, the electronic device 101 may transmit the information related to the change of the bandwidth to the external electronic device 700 (operation 811). For example, the electronic device 101 may transmit the information related to the change of the bandwidth to the external electronic device 700 through the frame 400 of the OMN protocol of FIG. 4A or the frame 410 of the OMI protocol of FIG. 4B.

According to an embodiment, the external electronic device 700 may transmit the response signal (e.g., ACK) corresponding to the reception of the information related to the bandwidth change to the electronic device 101 based on the reception of the information related to the bandwidth change (operation 813). For example, when the external electronic device 700 decodes the information related to the bandwidth change, the external electronic device 700 may transmit the positive response signal (e.g., ACK) to the electronic device 101. For example, when the external electronic device 700 has failed to decode the information related to the bandwidth change, the external electronic device 700 may transmit the negative response signal (e.g., NACK) to the electronic device 101 or limit the transmission of the response signal corresponding to the reception of the information related to the bandwidth change.

According to an embodiment, the electronic device 101 may transmit the data (or frames), which may generate the response from the external electronic device 700, to the external electronic device 700 based on the reception of the response signal (e.g., ACK) corresponding to the information related to the bandwidth change from the external electronic device 700 (operation 815). For example, when the electronic device 101 reduces the bandwidth for the wireless LAN communication to the second bandwidth, the electronic device 101 may transmit the data (or frames), which may generate the response from the external electronic device 700, to the external electronic device 700 using the first bandwidth or the second bandwidth. For example, when the electronic device 101 expands the bandwidth for the wireless LAN communication to the second bandwidth, the electronic device 101 may transmit the data (or frames), which may generate the response from the external electronic device 700, to the external electronic device 700 using the second bandwidth. For example, the second bandwidth may include the bandwidth to be changed for the wireless LAN communication in the electronic device 101. For example, the data (or frames), which may generate the response from the external electronic device 700, may include at least one of the address resolution protocol (ARP) request frame or the domain name system (DNS) query frame.

According to an embodiment, the electronic device 101 may identify the bandwidth of the response signal received from the external electronic device 700 based on the transmission of the data (or frames) that may generate the response from the external electronic device 700 (operation 817). For example, when the electronic device 101 reduces the bandwidth for the wireless LAN communication, the electronic device 101 may identify the bandwidth of the response signal received from the external electronic device 700 while maintaining the first bandwidth. For example, when the electronic device 101 expands the bandwidth for the wireless LAN communication, the electronic device 101 may identify the bandwidth of the response signal received from the external electronic device 700 while changing (or expanding) the bandwidth for the wireless LAN communication. For example, the first bandwidth may include the bandwidth set for the wireless LAN communication based on the access of the electronic device 101 to the external electronic device 700. For example, the first bandwidth may include the maximum bandwidth among the bandwidths supported by the electronic device 101 and the external electronic device 700.

According to an embodiment, when the bandwidth of the response signal received from the external electronic device 700 is the second bandwidth or the bandwidth smaller than the second bandwidth, the electronic device 101 may determine that the external electronic device 700 changes the bandwidth for the wireless LAN communication with the electronic device 101 (operation 819). For example, the electronic device 101 may change the bandwidth for the wireless LAN communication with the external electronic device 700 to the second bandwidth based on the determination that the external electronic device 700 changes the bandwidth for the wireless LAN communication with the electronic device 101. The electronic device 101 may perform the wireless LAN communication with the external electronic device 700 through the channel of the second bandwidth. For example, the change to the second bandwidth may include a series of operations of changing the bandwidth for the wireless LAN communication with the external electronic device 700 to the second bandwidth when reducing the bandwidth for the wireless LAN communication. For example, the change to the second bandwidth may include a series of operations of maintaining the changed second bandwidth to identify the bandwidth change in the external electronic device 700 when expanding the bandwidth for the wireless LAN communication.

According to an embodiment, when the bandwidth of the response signal received from the external electronic device 700 is greater than the second bandwidth or does not receive the response signal, the electronic device 101 may determine that the external electronic device 700 has failed to change the bandwidth for the wireless LAN communication with the electronic device 101. For example, when the electronic device 101 determines that the external electronic device 700 has failed to change the bandwidth for the wireless LAN communication with the electronic device 101, the electronic device 101 may add the information related to the external electronic device 700 to the abnormal device list.

According to an embodiment, when the electronic device 101 determines that it may not be identified whether the bandwidth of the external electronic device 700 is changed by monitoring the bandwidth of the data received from the external electronic device 700 for the specified third time, the electronic device 101 may transmit the data, which may generate the response from the external electronic device 700, to the external electronic device 700 (e.g., operation 815 of FIG. 8). The electronic device 101 may identify whether the external electronic device 700 changes the bandwidth for the wireless LAN communication with the electronic device 101 based on the bandwidth of the response signal received from the external electronic device 700.

According to an embodiment, the electronic device 101 may perform in parallel an operation (e.g., operations 711 to 719 of FIG. 7) of determining whether the bandwidth of the external electronic device 700 is changed by monitoring the bandwidth of the data received from the external electronic device 700 for the specified third time and an operation (e.g., operations 811 to 819 of FIG. 8) of determining whether the bandwidth of the external electronic device 700 is changed based on the bandwidth of the response signal corresponding to the data that may generate the response from the external electronic device 700.

According to an embodiment, the electronic device 101 may perform an operation (e.g., operations 711 to 719 of FIG. 7) of determining whether the bandwidth of the external electronic device 700 is changed by monitoring the bandwidth of the data received from the external electronic device 700 for the specified third time while performing an operation (e.g., operations 811 to 819 of FIG. 8) of determining whether the bandwidth of the external electronic device 700 is changed based on the bandwidth of the response signal corresponding to the data that may generate the response from the external electronic device 700.

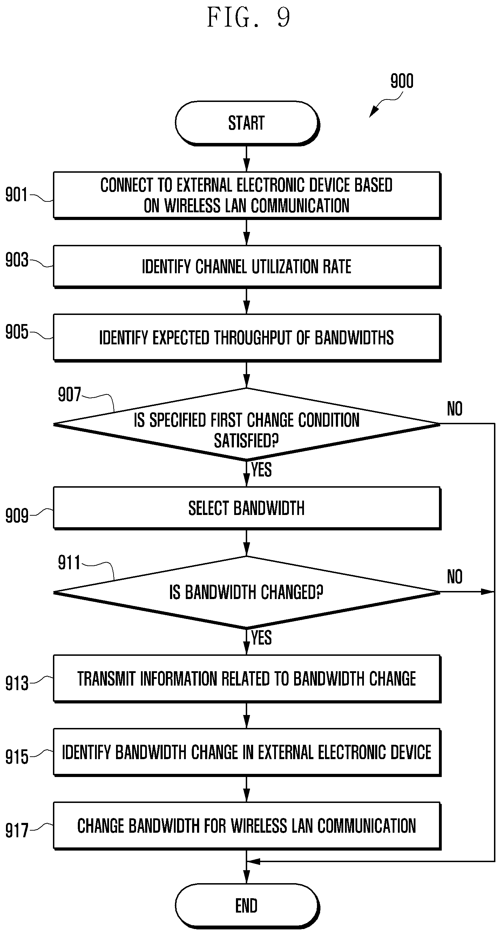

FIG. 9 is a flowchart 900 for changing the bandwidth based on the channel utilization rate in the electronic device according to an embodiment. In the following embodiments, each operation may be performed sequentially, but is not necessarily performed sequentially. For example, the order of each operation may be changed, and at least two operations may be performed in parallel. For example, the electronic device of FIG. 9 may be the electronic device 101 of FIG. 1 or FIG. 2.

According to an embodiment referring to FIG. 9, in operation 901, the electronic device (e.g., the electronic device 101 of FIG. 1 or FIG. 2) or the processor (e.g., the processor 120 of FIG. 1 or the processor 200 of FIG. 2) may perform the connection to the external electronic device (e.g., AP) based on the wireless LAN communication scheme. For example, the connection to the external electronic device may include a series of operations for accessing the external electronic device based on the wireless LAN communication scheme.

According to an embodiment, in operation 903, the electronic device (e.g., electronic device 101) or the processor (e.g., processor 120 or 200) may identify the channel utilization rate of each of the bandwidths available for the wireless LAN communication between the electronic device 101 and the external electronic device. For example, the bandwidths available for the wireless LAN communication between the electronic device 101 and the external electronic device may include the bandwidths supported by the external electronic device and the electronic device 101.

For example, the processor 200 may identify whether the external electronic device is included in the abnormal device list. When the information related to the external electronic device is included in the abnormal device list, the processor 200 may determine that the external electronic device may not change the bandwidth for the wireless LAN communication with the electronic device 101. When the information related to the external electronic device is not included in the abnormal device list, the processor 200 may determine that the external electronic device may change the bandwidth for the wireless LAN communication with the electronic device 101. For example, the abnormal device list includes at least one external electronic device that has failed to change the bandwidth related to the wireless LAN communication or has limited bandwidth change, and may be stored in the memory 220 or an external server. For example, the information related to the external electronic device may include at least one of the basic service set identifier (BSSID) or the media access control (MAC) address.

For example, when the processor 200 determines that the external electronic device may change the bandwidth for the wireless LAN communication with the electronic device 101, the processor 200 may identify the channel utilization rate. For example, the processor 200 may identify the channel utilization rate based on Equation 2 or Equation 3. For example, when there is no traffic of the wireless LAN communication, the processor 200 may identify the channel utilization rate using CCA Busy values of all the sub-channels included in the bandwidth as in Equation 2. For example, when there is traffic of the wireless LAN communication, the processor 200 may identify the channel utilization rate using only a CCA Busy value of a reference sub-channel as in Equation 3. For example, the processor 200 may also identify the channel utilization rate based on the CCA Busy values of the sub-channels or the CCA Busy value of the reference sub-channel that is acquired when the electronic device 101 performs the scan for connection to the external electronic device.

According to an embodiment, in operation 905, the electronic device (e.g., electronic device 101) or the processor (e.g., processor 120 or 200) may identify, based on the channel utilization rate, the expected throughput of each of the bandwidths available for the wireless LAN communication between the electronic device 101 and the external electronic device. For example, when the processor 200 does not perform the wireless LAN communication with the external electronic device, the processor 200 may identify the expected throughput of each of the bandwidths available for the wireless LAN communication between the electronic device 101 and the external electronic device based on the channel utilization rate of each of the bandwidths. For example, the expected throughput may be calculated based on Equation 1.

According to an embodiment, in operation 907, the electronic device (e.g., electronic device 101) or the processor (e.g., processor 120 or 200) may identify whether the specified first change condition is satisfied based on the expected throughput of the bandwidths available for the wireless LAN communication between the electronic device 101 and the external electronic device. For example, the processor 200 may determine whether there is the bandwidth in which the expected throughput reversal phenomenon occurs among the bandwidths available for the wireless LAN communication between the electronic device 101 and the external electronic device. For example, when there is the bandwidth in which the expected throughput reversal phenomenon has occurred, the processor 200 may determine that the specified first change condition is satisfied.

For example, when there is the bandwidth in which the expected throughput reversal phenomenon has occurred and the difference value of the bandwidth in which the reversal phenomenon has occurred exceeds a reference difference value, the processor 200 may determine that the specified first change condition is satisfied. For example, when the expected throughput of about 160 MHz among the bandwidths available for the wireless LAN communication between the electronic device 101 and the external electronic device is smaller than the expected throughput of about 80 MHz, the processor 200 may determine that the reversal phenomenon has occurred at about 160 MHz. The processor 200 may determine that the specified first change condition is satisfied when the difference value between the expected throughput of about 160 MHz and the expected throughput of about 80 MHz exceeds the reference difference value.

For example, when there is no bandwidth in which the expected throughput reversal phenomenon has occurred or the difference value of the bandwidth in which the reversal phenomenon has occurred is less than or equal to the reference difference value, the processor 200 may determine that the specified first change condition is not satisfied. For example, the expected throughput reversal phenomenon may indicate the state in which an expected throughput of a relatively wide bandwidth is smaller than an expected throughput of a relatively narrow bandwidth.

According to an embodiment, when the electronic device (e.g., the electronic device 101) or the processor (e.g., the processor 120 or 200) determines that the specified first change condition is not satisfied (e.g., 'No' in operation 907), the electronic device or the processor may terminate one embodiment for changing the bandwidth based on the channel utilization rate.

According to an embodiment, when the electronic device (e.g., the electronic device 101) or the processor (e.g., the processor 120 or 200) determines that the specified first change condition is satisfied (e.g., 'Yes' in operation 907), in operation 909, the electronic device or the processor may select the bandwidth for the wireless LAN communication with the external electronic device. For example, when there is at least one bandwidth in which the expected throughput reversal phenomenon has occurred, the processor 200 may select the second bandwidth for the wireless LAN communication with the external electronic device based on the remaining bandwidths excluding at least one bandwidth in which the expected throughput reversal phenomenon has occurred among the bandwidths available for the wireless LAN communication between the electronic device 101 and the external electronic device.

According to an embodiment, in operation 911, the electronic device (e.g., the electronic device 101) or the processor (e.g., the processor 120 or 200) may determine whether to change the bandwidth for the wireless LAN communication with the external electronic device based on the second bandwidth for the wireless LAN communication with the external electronic device. For example, when the first bandwidth set when accessing the external electronic device and the second bandwidth for the wireless LAN communication with the external electronic device are different, the processor 200 may determine that the bandwidth for the wireless LAN communication is changed. For example, when the first bandwidth set when accessing the external electronic device and the second bandwidth for the wireless LAN communication with the external electronic device are the same, the processor 200 may determine that the bandwidth for the wireless LAN communication is not changed.

According to an embodiment, when the electronic device (e.g., the electronic device 101) or the processor (e.g., the processor 120 or 200) determines not to change the bandwidth for the wireless LAN communication (e.g., 'No' in operation 911), the electronic device or the processor may terminal the embodiment for changing the bandwidth.

According to an embodiment, when the electronic device (e.g., the electronic device 101) or the processor (e.g., the processor 120 or 200) determines to change the bandwidth for the wireless LAN communication (e.g., 'Yes' in operation 911), in operation 913, the electronic device or the processor may transmit the information related to the change of the bandwidth to the external electronic device. For example, when the processor 200 supports the OMN protocol, as illustrated in FIG. 4A, the processor 200 may control the communication circuit 210 to set the channel width field 404 included in the 'operating mode' field 402 of the frame 400 including the OMN element to the value corresponding to the second bandwidth and transmit the channel width field 404 to the external electronic device. For example, when the processor 200 supports the OMI protocol, the processor 200 may control the communication circuit 210 to set the channel width field 412 of the frame 410 including the operating mode control subfield as illustrated in FIG. 4B to the value corresponding to the second bandwidth and transmit the channel width field 412 to the external electronic device. For example, the information related to the bandwidth change may be transmitted to the external electronic device through the channel of the first bandwidth.

According to an embodiment, in operation 915, the electronic device (e.g., the electronic device 101) or the processor (e.g., processor 120 or 200) may identify the bandwidth change for the wireless LAN communication with the electronic device 101 in the external electronic device. For example, the processor 200 may identify the bandwidth of the data (or frames) received from the external electronic device for the specified third time from the time when the response signal (e.g., ACK) corresponding to the information related to the bandwidth change is received from the external electronic device. For example, when the second bandwidth is smaller than the first bandwidth, the processor 200 may identify the bandwidth of the data (or frames) received from the external electronic device while maintaining the first bandwidth for the specified third time. For example, when the second bandwidth is greater than the first bandwidth, the processor 200 may identify the bandwidth of the data (or frames) received from the external electronic device while changing to the second bandwidth for the specified third time. For example, when the specified number or more of data (or frames) of the second bandwidth is continuously received within the specified third time, the processor 200 may determine that the external electronic device changes the bandwidth for the wireless LAN communication with the electronic device 101.

For example, the processor 200 may control the communication circuit 210 to transmit the data (or frames), which may generate the response from the external electronic device, to the external electronic device based on the reception of the response signal (e.g., ACK) corresponding to the information related to the bandwidth change from the external electronic device. The processor 200 may identify the bandwidth of the response signal received from the external electronic device. For example, when the second bandwidth is smaller than the first bandwidth, the processor 200 may perform the transmission of the data, which may generate the response from the external electronic device, and the reception of the response signal while maintaining the first bandwidth. For example, when the second bandwidth is greater than the first bandwidth, the processor 200 may perform the transmission of the data, which may generate the response from the external electronic device, and the reception of the response signal while the bandwidth for the wireless LAN communication with the external electronic device is changed to the second bandwidth. For example, the data (or frames), which may generate the response from the external electronic device, may include at least one of the address resolution protocol (ARP) request frame or the domain name system (DNS) query frame. For example, when the bandwidth of the response signal received from the external electronic device is the second bandwidth, the processor 200 may determine that the external electronic device changes the bandwidth for the wireless LAN communication with the electronic device 101.

According to an embodiment, in operation 917, the electronic device (e.g., the electronic device 101) or the processor (e.g., the processor 120 or 200) may change the bandwidth for the wireless LAN communication with the external electronic device to the second bandwidth based on the determination that the external electronic device changes the bandwidth for the wireless LAN communication with the electronic device 101. For example, when the second bandwidth is smaller than the first bandwidth, the processor 200 may control the communication circuit 210 to change the bandwidth for the wireless LAN communication with the external electronic device from the first bandwidth to the second bandwidth. For example, when the second bandwidth is greater than the first bandwidth, the processor 200 may control the communication circuit 210 to maintain the changed second bandwidth in order to identify the bandwidth change in the external electronic device.

According to an embodiment, when the electronic device 101 determines that the external electronic device does not change the bandwidth for the wireless LAN communication with the electronic device 101, the electronic device 101 may add the external electronic device to the abnormal device list. For example, the processor 200 may add the information related to the external electronic device to the abnormal device list. For example, the information related to the external electronic device may include at least one of the basic service set identifier (BSSID) or the media access control (MAC) address.

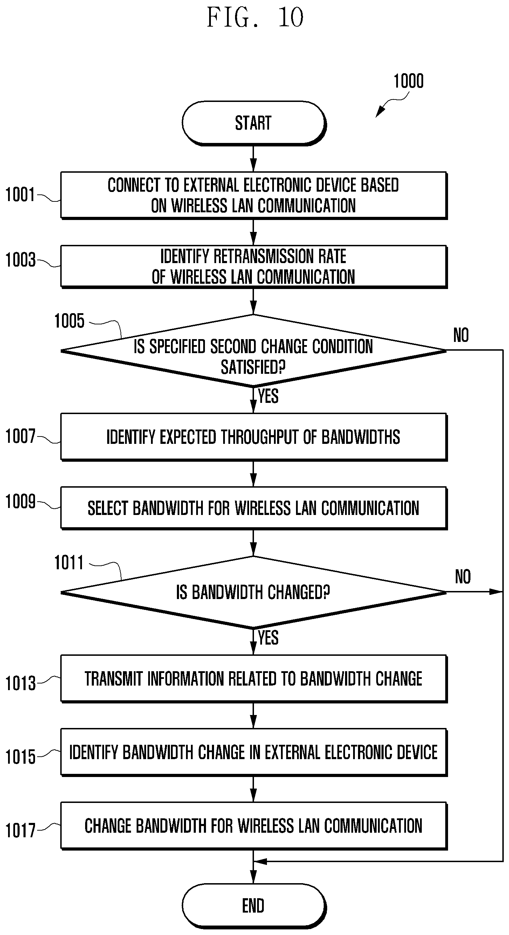

FIG. 10 is a flowchart 1000 for changing the bandwidth based on the data retransmission rate in the electronic device according to an embodiment. In the following embodiments, each operation may be performed sequentially, but is not necessarily performed sequentially. For example, the order of each operation may be changed, and at least two operations may be performed in parallel. For example, the electronic device of FIG. 10 may be the electronic device 101 of FIG. 1 or FIG. 2.

According to an embodiment referring to FIG. 10, the electronic device (e.g., the electronic device 101 of FIG. 1 or FIG. 2) or the processor (e.g., the processor 120 of FIG. 1 or the processor 200 of FIG. 2) may perform the wireless LAN communication with the external electronic device (e.g., the access point (AP)) in operation 1001. For example, the processor 200 may control the communication circuit 210 to access the external electronic device based on the wireless LAN communication scheme. When the processor 200 accesses the external electronic device, the processor 200 may control the communication circuit 210 to perform the wireless LAN communication with the external electronic device through the channel of the first bandwidth (or the first frequency bandwidth) allocated from the external electronic device. For example, the wireless LAN communication with the external electronic device may include a series of operations in which the electronic device 101 and the external electronic device perform at least one of the transmission or reception of data.

According to an embodiment, in operation 1003, the electronic device (e.g., the electronic device 101) or the processor (e.g., processor 120 or 200) may identify the retransmission rate of the wireless LAN communication with the external electronic device. For example, the retransmission rate may be represented by a ratio of the number of times the electronic device 101 transmits data for a specified fourth time and the number of times the electronic device 101 retransmits data.

According to an embodiment, in operation 1005, the electronic device (e.g., the electronic device 101) or the processor (e.g., processor 120 or 200) may identify whether a specified second change condition is satisfied based on the retransmission rate of the wireless LAN communication with the external electronic device. For example, the processor 200 may determine that the specified second change condition is satisfied when the retransmission rate of the wireless LAN communication with the external electronic device exceeds the specified reference retransmission rate. For example, the processor 200 may determine that the specified second change condition is satisfied when the retransmission rate of the wireless LAN communication with the external electronic device exceeds the specified reference retransmission rate in the weak electric field state. For example, when the processor 200 is not in the weak electric field state or when the retransmission rate of the wireless LAN communication with the external electronic device is less than or equal to the specified reference retransmission rate, the processor 200 may determine that the specified second change condition is not satisfied. For example, the weak electric field state may indicate the state in which the electric field strength (e.g., received signal strength indication (RSSI)) for the wireless LAN communication with the electronic device 101 and the external electronic device is smaller than the specified reference electric field strength.

According to an embodiment, when the electronic device (e.g., the electronic device 101) or the processor (e.g., the processor 120 or 200) determines that the specified second change condition is not satisfied (e.g., 'No' in operation 1005), the electronic device or the processor may terminate one embodiment for changing the bandwidth based on the data retransmission rate.

According to an embodiment, when the electronic device (e.g., electronic device 101) or the processor (e.g., processor 120 or 200) determines that the specified second change condition is satisfied (e.g., 'Yes' in operation 1005), in operation 1007, the electronic device or the processor may identify the expected throughput of each of the bandwidths available for the wireless LAN communication between the electronic device 101 and the external electronic device. For example, the processor 200 may identify the expected throughput of each of the bandwidths available for the wireless LAN communication between the electronic device 101 and the external electronic device based on Equation 1.

According to an embodiment, in operation 1009, the electronic device (e.g., the electronic device 101) or the processor (e.g., the processor 120 or 200) may select the optimal second bandwidth for the wireless LAN communication with the external electronic device based on the expected throughput of each of the available bandwidths for the wireless LAN communication between the electronic device 101 and the external electronic device and the traffic volume for the wireless LAN communication with the external electronic device. For example, the optimal second bandwidth may include a bandwidth having a smallest expected throughput while the expected throughput exceeds the reference throughput set by the sum of the traffic volume and the margin among the bandwidths available for the wireless LAN communication between the electronic device 101 and the external electronic device. For example, the bandwidths available for the wireless LAN communication between the electronic device 101 and the external electronic device may include about 20 MHz, about 40 MHz, and about 80 MHz. For example, the expected throughput of the bandwidth of about 20 MHz may be about 100 Mbps, the expected throughput of the bandwidth of about 40 MHz may be about 200 Mbps, and the expected throughput of the bandwidth of about 80 MHz may be about 400 Mbps. When the traffic volume (Traffirate) is 20 Mbps and a margin is 100 Mbps, the processor 200 may select, as the second bandwidth, a bandwidth of about 40 MHz which is the smallest bandwidth while being greater than the reference throughput (e.g., about 120 Mbps) set by the sum of the traffic volume and the margin. For example, the traffic volume may include the size of the data transmitted and/or received by the electronic device 101 and the external electronic device through the wireless LAN communication during the specified first time (e.g., unit time). For example, the specified first time may include the reference time for calculating the traffic volume of the wireless LAN communication between the electronic device 101 and the external electronic device.

According to an embodiment, in operation 1011, the electronic device (e.g., the electronic device 101) or the processor (e.g., the processor 120 or 200) may determine whether to change the bandwidth for the wireless LAN communication with the external electronic device based on the optimal second bandwidth for the wireless LAN communication with the external electronic device. For example, when the first bandwidth being used for the wireless LAN communication with the external electronic device and the optimal second bandwidth for the wireless LAN communication with the external electronic device are different, the processor 200 may determine to change the bandwidth for the wireless LAN communication. For example, when the first bandwidth being used for the wireless LAN communication with the external electronic device and the optimal second bandwidth for the wireless LAN communication with the external electronic device are the same, the processor 200 may determine not to change the bandwidth for the wireless LAN communication.

According to an embodiment, when the electronic device (e.g., the electronic device 101) or the processor (e.g., the processor 120 or 200) determines not to change the bandwidth for the wireless LAN communication (e.g., 'No' in operation 1011), the electronic device or the processor may terminate one embodiment for changing the bandwidth based on the data retransmission rate.

According to an embodiment, when the electronic device (e.g., the electronic device 101) or the processor (e.g., the processor 120 or 200) determines to change the bandwidth for the wireless LAN communication (e.g., 'Yes' in operation 1011), in operation 1013, the electronic device or the processor may transmit the information related to the change of the bandwidth to the external electronic device. For example, when the processor 200 supports the OMN protocol, as illustrated in FIG. 4A, the processor 200 may control the communication circuit 210 to set the channel width field 404 included in the 'operating mode' field 402 of the frame 400 including the OMN element to the value corresponding to the second bandwidth and transmit the channel width field 404 to the external electronic device. For example, when the processor 200 supports the OMI protocol, the processor 200 may control the communication circuit 210 to set the channel width field 412 of the frame 410 including the operating mode control subfield as illustrated in FIG. 4B to the value corresponding to the second bandwidth and transmit the channel width field 412 to the external electronic device. For example, the information related to the bandwidth change may be transmitted to the external electronic device through the channel of the first bandwidth.

According to an embodiment, in operation 1015, the electronic device (e.g., the electronic device 101) or the processor (e.g., processor 120 or 200) may identify the bandwidth change for the wireless LAN communication with the electronic device 101 in the external electronic device. For example, the processor 200 may identify the bandwidth of the data (or frames) received from the external electronic device for the specified third time from the time when the response signal (e.g., ACK) corresponding to the information related to the bandwidth change is received from the external electronic device. For example, when the second bandwidth is smaller than the first bandwidth, the processor 200 may identify the bandwidth of the data (or frames) received from the external electronic device while maintaining the first bandwidth for the specified third time. For example, when the second bandwidth is greater than the first bandwidth, the processor 200 may identify the bandwidth of the data (or frames) received from the external electronic device while changing to the second bandwidth for the specified third time. For example, when the specified number or more of data (or frames) of the second bandwidth is continuously received within the specified third time, the processor 200 may determine that the external electronic device changes the bandwidth for the wireless LAN communication with the electronic device 101.

For example, the processor 200 may control the communication circuit 210 to transmit the data (or frames), which may generate the response from the external electronic device, to the external electronic device based on the reception of the response signal (e.g., ACK) corresponding to the information related to the bandwidth change from the external electronic device. The processor 200 may identify the bandwidth of the response signal received from the external electronic device. For example, when the second bandwidth is smaller than the first bandwidth, the processor 200 may perform the transmission of the data, which may generate the response from the external electronic device, and the reception of the response signal while maintaining the first bandwidth. For example, when the second bandwidth is greater than the first bandwidth, the processor 200 may perform the transmission of the data, which may generate the response from the external electronic device, and the reception of the response signal while the bandwidth for the wireless LAN communication with the external electronic device is changed to the second bandwidth. For example, the data (or frames), which may generate the response from the external electronic device, may include at least one of the address resolution protocol (ARP) request frame or the domain name system (DNS) query frame. For example, when the bandwidth of the response signal received from the external electronic device is the second bandwidth, the processor 200 may determine that the external electronic device changes the bandwidth for the wireless LAN communication with the electronic device 101.

According to an embodiment, in operation 1017, the electronic device (e.g., the electronic device 101) or the processor (e.g., the processor 120 or 200) may change the bandwidth for the wireless LAN communication with the external electronic device to the second bandwidth based on the determination that the external electronic device changes the bandwidth for the wireless LAN communication with the electronic device 101. For example, when the second bandwidth is smaller than the first bandwidth, the processor 200 may control the communication circuit 210 to change the bandwidth for the wireless LAN communication with the external electronic device from the first bandwidth to the second bandwidth. For example, when the second bandwidth is greater than the first bandwidth, the processor 200 may control the communication circuit 210 to maintain the changed second bandwidth in order to identify the bandwidth change in the external electronic device.

According to an embodiment, the electronic device 101 may perform the wireless LAN communication with the external electronic device through the channel of the second bandwidth. For example, the wireless LAN communication with the external electronic device through the second bandwidth may be performed based on the channel of the second bandwidth set based on the channel of the first bandwidth allocated from the external electronic device when connected to the external electronic device.

According to an embodiment, when the electronic device 101 determines that the external electronic device does not change the bandwidth for the wireless LAN communication with the electronic device 101, the electronic device 101 may add the external electronic device to the abnormal device list. For example, the processor 200 may add the information related to the external electronic device to the abnormal device list. For example, the information related to the external electronic device may include at least one of the basic service set identifier (BSSID) or the media access control (MAC) address.

According to an embodiment, the electronic device may selectively change the bandwidth for the wireless LAN communication with the external electronic device. For example, the processor 200 may identify whether the external electronic device is included in the abnormal device list. When the information related to the external electronic device is included in the abnormal device list, the processor 200 may determine that the external electronic device may not change the bandwidth for the wireless LAN communication with the electronic device 101. When the information related to the external electronic device is not included in the abnormal device list, the processor 200 may determine that the external electronic device may change the bandwidth for the wireless LAN communication with the electronic device 101. For example, when the processor 200 determines that the external electronic device may change the bandwidth for the wireless LAN communication with the electronic device 101, the processor 200 may perform a series of operations for changing the bandwidth for the wireless LAN communication with the external electronic device.

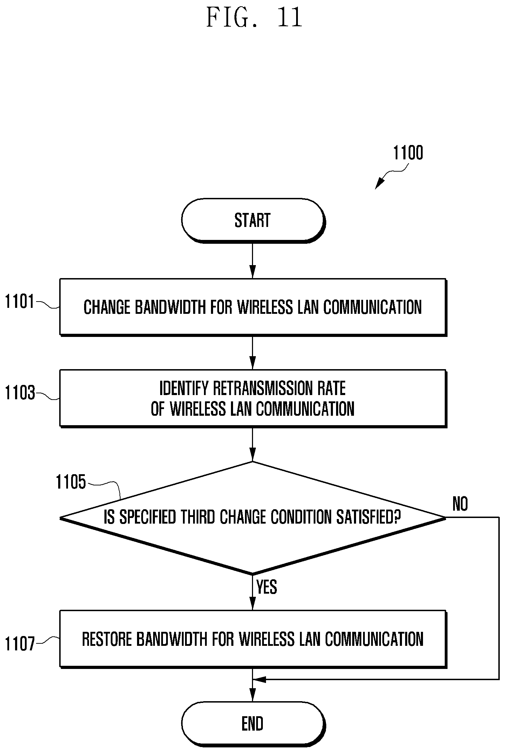

FIG. 11 is a flowchart 1100 for restoring the bandwidth in the electronic device according to an embodiment. For example, at least a part of FIG. 11 may include detailed operations of operation 1017 of FIG. 3. In the following embodiments, each operation may be performed sequentially, but is not necessarily performed sequentially. For example, the order of each operation may be changed, and at least two operations may be performed in parallel. For example, the electronic device of FIG. 11 may be the electronic device 101 of FIG. 1 or FIG. 2.

According to an embodiment referring to FIG. 11, when the electronic device (e.g., the electronic device 101 of FIG. 1 or FIG. 2) or the processor (e.g., the processor 120 of FIG. 1 or the processor 200 of FIG. 2) identifies the bandwidth change for the wireless LAN communication with the electronic device 101 in the external electronic device (e.g., an access point (AP)) (e.g., operation 1015 of FIG. 10), in operation 1101, the electronic device or the processor may change the bandwidth for the wireless LAN communication with the external electronic device to the second bandwidth. For example, when the second bandwidth is smaller than the first bandwidth, the processor 200 may control the communication circuit 210 to change the bandwidth for the wireless LAN communication with the external electronic device from the first bandwidth to the second bandwidth. For example, when the second bandwidth is greater than the first bandwidth, the processor 200 may control the communication circuit 210 to maintain the changed second bandwidth in order to identify the bandwidth change in the external electronic device.

According to an embodiment, in operation 1103, the electronic device (e.g., the electronic device 101) or the processor (e.g., processor 120 or 200) may identify the retransmission rate of the wireless LAN communication with the external electronic device. For example, the processor 200 may determine the retransmission rate of the wireless LAN communication with the external electronic device for a specified fifth time after changing the bandwidth for the wireless LAN communication with the external electronic device.

According to an embodiment, in operation 1105, the electronic device (e.g., the electronic device 101) or the processor (e.g., processor 120 or 200) may identify whether a specified third change condition is satisfied based on the retransmission rate of the wireless LAN communication with the external electronic device. For example, when the processor 200 determines that the retransmission rate of the wireless LAN communication is not improved based on the bandwidth change of the wireless LAN communication with the external electronic device, the processor 200 may determine that the specified third change condition is satisfied. For example, the state in which the data retransmission rate is not improved may include a state in which the data retransmission rate is the same as before the bandwidth change, is higher than before the bandwidth change, or is not lower than before the bandwidth change by a reference interval or more. For example, when the processor 200 determines that the retransmission rate of the wireless LAN communication is improved based on the bandwidth change of the wireless LAN communication with the external electronic device, the processor 200 may determine that the specified third change condition is not satisfied. For example, the state in which the data retransmission rate is improved may include a state in which the data retransmission rate is lower than before the bandwidth change by the reference interval or more.

According to an embodiment, when the electronic device (e.g., the electronic device 101) or the processor (e.g., the processor 120 or 200) determines that the specified third change condition is not satisfied (e.g., 'No' in operation 1105), the electronic device or the processor may terminate one embodiment for restoring the bandwidth. For example, when the processor 200 determines that the specified third change condition is not satisfied based on the data retransmission rate, the processor 200 may control the communication circuit 210 to perform the wireless LAN communication with the external electronic device based on the changed second bandwidth.

According to an embodiment, when the electronic device (e.g., the electronic device 101) or the processor (e.g., the processor 120 or 200) determines that the specified third change condition is satisfied (e.g., 'Yes' in operation 1105), in operation 1107, the electronic device or the processor may restore the bandwidth for the wireless LAN communication with the external electronic device. For example, when the processor 200 determines that the data retransmission rate of the wireless LAN communication is not improved while the bandwidth for the wireless LAN communication with the external electronic device is changed to the second bandwidth, the processor 200 may restore the bandwidth for the wireless LAN communication with the external electronic device to the first bandwidth.

According to an embodiment, a method of operating the electronic device (e.g., the electronic device 101 of FIG. 1 or FIG. 2) may include an operation of performing the wireless LAN communication with the external electronic device (e.g., the external electronic device 700 of FIG. 7 or FIG. 8) through the channel of the first bandwidth. According to an embodiment, the operation method of an electronic device may include an operation of selecting a second bandwidth based on an expected throughput of each of a plurality of bandwidths supportable for the wireless LAN communication with the external electronic device during the wireless LAN communication. According to an embodiment, the operation method of an electronic device may include an operation of transmitting request information related to a change to the second bandwidth to the external electronic device, when the second bandwidth is different from the first bandwidth. According to an embodiment, the operation method of an electronic device may include an operation of changing the bandwidth for the wireless LAN communication to the second bandwidth, when it is determined that the bandwidth change of the external electronic device is completed based on data received from the external electronic device.

According to an embodiment, the operation method of an electronic device may include an operation of identifying whether the external electronic device is included in the abnormal device list. According to an embodiment, the operation of selecting the second bandwidth may include an operation of selecting the second bandwidth when the external electronic device is not included in the abnormal device list.

According to an embodiment, the operation method of an electronic device may include an operation of determining that the bandwidth change of the external electronic device is limited when the external electronic device is included in the abnormal device list.

According to an embodiment, the operation method of an electronic device may include an operation of updating the abnormal device list based on the information related to the external electronic device when it is determined that the bandwidth change of the external electronic device is not completed.

According to an embodiment, the operation method of an electronic device may include an operation of identifying the bandwidth of the data received from the external electronic device after transmitting the request information related to the change to the second bandwidth. According to an embodiment, the operation method of an electronic device may include an operation of determining that the bandwidth change of the external electronic device is completed when the specified number or more of data corresponding to the second bandwidth are continuously received during the specified time.

According to an embodiment, the operation of identifying the bandwidth may include an operation of changing the first bandwidth to the second bandwidth and identifying the bandwidth of the data received from the external electronic device based on the second bandwidth, after transmitting the request information related to the change to the second bandwidth when the second bandwidth is greater than the first bandwidth. According to an embodiment, the operation of identifying the bandwidth may include an operation of identifying the bandwidth of the data received from the external electronic device based on the first bandwidth, after transmitting the request information related to the change to the second bandwidth when the second bandwidth is smaller than the first bandwidth.

According to an embodiment, the operation method of an electronic device may include an operation of transmitting the specified request signal to the external electronic device, after transmitting the request information related to the change to the second bandwidth. According to an embodiment, the operation method of an electronic device may include an operation of determining whether the bandwidth change of the external electronic device is completed based on the bandwidth of the response signal, when the response signal corresponding to the specified request signal is received from the external electronic device.

According to an embodiment, the specified request signal may include at least one of the address resolution protocol (ARP) request frame or the domain name system (DNS) query frame.

According to an embodiment, the operation method of an electronic device may include an operation of restoring the frequency bandwidth for the wireless LAN communication to the first frequency bandwidth when the wireless LAN communication with the external electronic device is terminated.

The embodiments of the present disclosure disclosed in this specification and drawings present merely specific examples to easily describe the technical contents according to the embodiments of the present disclosure and to help understand the embodiments of the present disclosure, and are not intended to limit the scope of the embodiments of the present disclosure. Therefore, the scope of an embodiment of the present disclosure should be interpreted as including all changes or modifications derived based on the technical idea of an embodiment of the present disclosure in addition to the embodiments disclosed herein.

**Claims**

1.   An electronic device (101), comprising:

a communication circuit (192 or 210) that supports wireless LAN communication;
at least one processor (120 or 200) that is operatively connected to the communication circuit; and
a memory (130 or 220) that is operatively connected to the at least one processor,
wherein the memory stores instructions that, when executed by the at least one processor, cause the electronic device to
perform the wireless LAN communication with an external electronic device through a channel of a first bandwidth via the communication circuit,
select a second bandwidth based on an expected throughput of each of a plurality of bandwidths supportable for the wireless LAN communication with the external electronic device during the wireless LAN communication,
transmit request information related to a change to the second bandwidth to the external electronic device through the communication circuit, when the second bandwidth is different from the first bandwidth, and
change the bandwidth for the wireless LAN communication to the second bandwidth, when it is determined that the bandwidth change of the external electronic device is completed based on data received from the external electronic device.

2.   The electronic device (101) of claim 1, wherein the memory stores instructions that, when executed by the at least one processor, cause the electronic device to select the second bandwidth, when the external electronic device is not included in an abnormal device list stored in the memory.

3.   The electronic device (101) of claim 1 or 2, wherein the memory stores instructions that, when executed by the at least one processor, cause the electronic device to determine that the bandwidth change of the external electronic device is limited, when the external electronic device is included in the abnormal device list.

4.   The electronic device (101) of any one of claims 1 to 3, wherein the memory stores instructions that, when executed by the at least one processor, cause the electronic device to update the abnormal device list based on information related to the external electronic device, when it is determined that the bandwidth change of the external electronic device is not completed.

5.   The electronic device (101) of claim 1, wherein the memory stores instructions that, when executed by the at least one processor, cause the electronic device to

transmit the request information related to the change to the second bandwidth and then identify a bandwidth of the data received from the external electronic device, and
determine that the bandwidth change of the external electronic device is completed, when a specified number or more of data corresponding to the second bandwidth is continuously received for a specified time.

6.   The electronic device (101) of claim 5, wherein the memory stores instructions that, when executed by the at least one processor, cause the electronic device to

change the first bandwidth to the second bandwidth and identify the bandwidth of the data received from the external electronic device based on the second bandwidth, after transmitting the request information related to the change to the second bandwidth when the second bandwidth is greater than the first bandwidth, and identify the bandwidth of the data received from the external electronic device based on the first bandwidth, after transmitting the request information related to the change to the second bandwidth when the second bandwidth is smaller than the first bandwidth.

7. The electronic device (101) of claim 1, wherein the memory stores instructions that, when executed by the at least one processor, cause the electronic device to

transmit the request information related to the change to the second bandwidth and then transmit a specified request signal to the external electronic device, and
determine whether the bandwidth change of the external electronic device is completed based on a bandwidth of a response signal corresponding to the specified request signal, when the response signal is received from the external electronic device.

8. The electronic device (101) of claim 1, wherein the memory stores instructions that, when executed by the at least one processor, cause the electronic device to restore a frequency bandwidth for the wireless LAN communication to the first frequency bandwidth, when the wireless LAN communication with the external electronic device is terminated.

9. An operation method of an electronic device, comprising:

performing wireless LAN communication with an external electronic device through a channel of a first bandwidth;
selecting a second bandwidth based on an expected throughput of each of a plurality of bandwidths supportable for the wireless LAN communication with the external electronic device during the wireless LAN communication;
transmitting request information related to a change to the second bandwidth to the external electronic device, when the second bandwidth is different from the first bandwidth; and
changing the bandwidth for the wireless LAN communication to the second bandwidth, when it is determined that the bandwidth change of the external electronic device is completed based on data received from the external electronic device.

10. The operation method of claim 9, further comprising identifying whether the external electronic device is included in an abnormal device list,
wherein the selecting of the second bandwidth includes selecting the second bandwidth when the external electronic device is not included in the abnormal device list.

11. The operation method of claim 9 or 10, further comprising determining that the bandwidth change of the external electronic device is limited, when the external electronic device is included in the abnormal device list.

12. The operation method of any one of claims 9 to 11, further comprising updating the abnormal device list based on information related to the external electronic device, when it is determined that the bandwidth change of the external electronic device is not completed.

13. The operation method of claim 9, further comprising:

transmitting the request information related to the change to the second bandwidth and then identifying a bandwidth of the data received from the external electronic device; and
determining that the bandwidth change of the external electronic device is completed, when a specified number or more of data corresponding to the second bandwidth is continuously received for a specified time.

14. The operation method of claim 13, wherein
the identifying of the bandwidth includes:

changing the first bandwidth to the second bandwidth and identifying the bandwidth of the data received from the external electronic device based on the second bandwidth, after transmitting the request information related to the change to the second bandwidth when the second bandwidth is greater than the first bandwidth; and
identifying the bandwidth of the data received from the external electronic device based on the first bandwidth, after transmitting the request information related to the change to the second bandwidth when the second bandwidth is smaller than the first bandwidth.

15. The operation method of claim 9, further comprising:

transmitting the request information related to the change to the second bandwidth and then transmitting a specified request signal to the external electronic device; and
determining whether the bandwidth change of the external electronic device is completed based on a bandwidth of a response signal corresponding to the specified request signal, when the response signal is received from the external electronic device.

# FIG. 1

ELECTRONIC DEVICE 101

- INPUT MODULE 150
- SOUND OUTPUT MODULE 155
- BATTERY 189
- POWER MANAGEMENT MODULE 188
- DISPLAY MODULE 160
- PROCESSOR 120
  - MAIN PROCESSOR 121
  - AUXILIARY PROCESSOR 123
- MEMORY 130
  - VOLATILE MEMORY 132
  - NON-VOLATILE MEMORY 134
    - INTERNAL MEMORY 136
    - EXTERNAL MEMORY 138
- COMMUNICATION MODULE 190
  - WIRELESS COMMUNICATION MODULE 192
  - WIRED COMMUNICATION MODULE 194
- SUBSCRIBER IDENTIFICATION MODULE 196
- ANTENNA MODULE 197
- AUDIO MODULE 170
- SENSOR MODULE 176
- INTERFACE 177
- CONNECTION TERMINAL 178
- HAPTIC MODULE 179
- CAMERA MODULE 180

PROGRAM 140
- APPLICATION 146
- MIDDLEWARE 144
- OPERATING SYSTEM 142

100

SECOND NETWORK 199

ELECTRONIC DEVICE 104

FIRST NETWORK 198

ELECTRONIC DEVICE 102

SERVER 108

EP 4 765 981 A1

FIG. 2

# FIG. 3

300

START

301 — PERFORM WIRELESS LAN COMMUNICATION
WITH EXTERNAL ELECTRONIC DEVICE

303 — IDENTIFY EXPECTED THROUGHPUT OF BANDWIDTHS

305 — SELECT BANDWIDTH FOR WIRELESS LAN COMMUNICATION

307 — IS BANDWIDTH CHANGED? — NO

YES

309 — TRANSMIT INFORMATION RELATED TO BANDWIDTH CHANGE

311 — IDENTIFY BANDWIDTH CHANGE IN EXTERNAL ELECTRONIC DEVICE

313 — CHANGE BANDWIDTH FOR WIRELESS LAN COMMUNICATION

END

FIG. 4A

400

402

| Element ID | Length | Operating Mode |
| --- | --- | --- |

| B0 | B1 | B2 | B3 | B4 | B6 | B7 | |
| --- | --- | --- | --- | --- | --- | --- | --- |
| Channel Width | | Reserved | | Rx Nss | | Rx Nss Type | |

404

FIG. 4B

EP 4 765 981 A1

410

412

| B0        B2 | B3        B4 | B5 | B6        B8 | B9 | B10 | B11 |
|---|---|---|---|---|---|---|
| Rx Nss | Channel Width | UL MU Disable | Tx NSTS | ER SU Dis-able | DL MU-MIMO Resound Recommendation | UL MU Data Disable |

FIG. 5

500

```
                        ┌──────────────┐
                        │    START     │
                        └──────┬───────┘
                               │
     ┌─────────────────────────┴─────────────────────────┐
501 ─┤         PERFORM WIRELESS LAN COMMUNICATION          │
     │            WITH EXTERNAL ELECTRONIC DEVICE          │
     └─────────────────────────┬─────────────────────────┘
                               │
                               ▼
503 ─              IS EXTERNAL ELECTRONIC DEVICE INCLUDED       YES
                        IN ABNORMAL DEVICE LIST
                               │
                               │ NO
                               ▼
     ┌─────────────────────────────────────────────────┐
505 ─┤              IDENTIFY MAXIMUM BANDWIDTH            │
     │            FOR WIRELESS LAN COMMUNICATION         │
     └─────────────────────────┬───────────────────────┘
                               │
                               ▼
     ┌─────────────────────────────────────────────────┐
507 ─┤         IDENTIFY EXPECTED THROUGHPUT OF BANDWIDTHS │
     └─────────────────────────┬───────────────────────┘
                               │
                               ▼
                        ┌──────────────┐
                        │     END      │
                        └──────────────┘
```

FIG. 6

600

START

601 — IS BANDWIDTH CHANGED
IN EXTERNAL ELECTRONIC DEVICE?

NO

YES

603 — CHANGE BANDWIDTH FOR WIRELESS LAN COMMUNICATION

ADD EXTERNAL ELECTRONIC DEVICE TO ABNORMAL DEVICE LIST — 605

END

EP 4 765 981 A1

# FIG. 7

101

700

ELECTRONIC DEVICE

EXTERNAL ELECTRONIC DEVICE

INFORMATION RELATED TO BANDWIDTH CHANGE ——711

ACK ——713

DATA ——715

·
·
·

DATA ——717

IDENTIFY BANDWIDTH CHANGE OF EXTERNAL ELECTRONIC DEVICE ——719

# FIG. 8

101

700

ELECTRONIC
DEVICE

EXTERNAL
ELECTRONIC DEVICE

INFORMATION RELATED TO BANDWIDTH CHANGE

811

ACK

813

DATA

815

RESPONSE DATA

817

IDENTIFY BANDWIDTH CHANGE
OF EXTERNAL ELECTRONIC DEVICE

819

# FIG. 9

900

```
START
```

901 — CONNECT TO EXTERNAL ELECTRONIC DEVICE BASED ON WIRELESS LAN COMMUNICATION

903 — IDENTIFY CHANNEL UTILIZATION RATE

905 — IDENTIFY EXPECTED THROUGHPUT OF BANDWIDTHS

907 — IS SPECIFIED FIRST CHANGE CONDITION SATISFIED? — NO

YES

909 — SELECT BANDWIDTH

911 — IS BANDWIDTH CHANGED? — NO

YES

913 — TRANSMIT INFORMATION RELATED TO BANDWIDTH CHANGE

915 — IDENTIFY BANDWIDTH CHANGE IN EXTERNAL ELECTRONIC DEVICE

917 — CHANGE BANDWIDTH FOR WIRELESS LAN COMMUNICATION

```
END
```

# FIG. 10

1000

START

1001 — CONNECT TO EXTERNAL ELECTRONIC DEVICE BASED ON WIRELESS LAN COMMUNICATION

1003 — IDENTIFY RETRANSMISSION RATE OF WIRELESS LAN COMMUNICATION

1005 — IS SPECIFIED SECOND CHANGE CONDITION SATISFIED?  — NO

YES

1007 — IDENTIFY EXPECTED THROUGHPUT OF BANDWIDTHS

1009 — SELECT BANDWIDTH FOR WIRELESS LAN COMMUNICATION

1011 — IS BANDWIDTH CHANGED?  — NO

YES

1013 — TRANSMIT INFORMATION RELATED TO BANDWIDTH CHANGE

1015 — IDENTIFY BANDWIDTH CHANGE IN EXTERNAL ELECTRONIC DEVICE

1017 — CHANGE BANDWIDTH FOR WIRELESS LAN COMMUNICATION

END

# FIG. 11

1100

```
                    START

1101    CHANGE BANDWIDTH FOR WIRELESS LAN COMMUNICATION

1103         IDENTIFY RETRANSMISSION RATE
              OF WIRELESS LAN COMMUNICATION

1105    IS SPECIFIED THIRD CHANGE CONDITION SATISFIED?    NO

                    YES

1107    RESTORE BANDWIDTH FOR WIRELESS LAN COMMUNICATION

                    END
```

## INTERNATIONAL SEARCH REPORT

| International application No. |
| --- |
| **PCT/KR2024/014337** |

| A. | CLASSIFICATION OF SUBJECT MATTER |
| --- | --- |

**H04W 72/0457**(2023.01)i; **H04W 72/54**(2023.01)i; **H04L 5/00**(2006.01)i; **H04W 84/12**(2009.01)i; **H04W 88/02**(2009.01)i; **H04W 72/0453**(2023.01)i

According to International Patent Classification (IPC) or to both national classification and IPC

| B. | FIELDS SEARCHED |
| --- | --- |

Minimum documentation searched (classification system followed by classification symbols)

H04W 72/0457(2023.01); H04L 47/70(2022.01); H04L 49/35(2022.01); H04W 24/02(2009.01); H04W 36/06(2009.01); H04W 72/00(2009.01); H04W 76/02(2009.01); H04W 76/12(2018.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: different bandwidth, channel switch, throughput, target channel, request, response

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| Y | US 2012-0314614 A1 (WENTINK, Maarten Menzo et al.) 13 December 2012 (2012-12-13) See paragraphs [0073]-[0074]; claims 1, 6 and 10-11; and figure 6. | 1,8-9 |
| A | | 2-7,10-15 |
| Y | US 2013-0329693 A1 (LEE, Jihyun et al.) 12 December 2013 (2013-12-12) See paragraphs [0032]-[0053]; claim 8; and figures 2-6. | 1,8-9 |
| A | US 2023-0075068 A1 (INTEL CORPORATION) 09 March 2023 (2023-03-09) See paragraphs [0036]-[0056]; and figures 3-4B. | 1-15 |
| A | US 2009-0168706 A1 (AVONTS, Jeroen Raf Odette) 02 July 2009 (2009-07-02) See paragraphs [0090]-[0104]; and figures 2a-4. | 1-15 |
| A | WO 2023-277460 A1 (SAMSUNG ELECTRONICS CO., LTD.) 05 January 2023 (2023-01-05) See paragraphs [0074]-[0127]; and figures 4-12. | 1-15 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 January 2025** | **03 January 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2024/014337**

| Patent document cited in search report | | | Publication date (day/month/year) | Patent family member(s) | | | Publication date (day/month/year) |
|---|---|---|---|---|---|---|---|
| US | 2012-0314614 | A1 | 13 December 2012 | CN | 102138356 | A | 27 July 2011 |
| | | | | CN | 105592513 | A | 18 May 2016 |
| | | | | EP | 2321995 | A2 | 18 May 2011 |
| | | | | EP | 2321995 | B1 | 02 October 2019 |
| | | | | JP | 2012-500606 | A | 05 January 2012 |
| | | | | KR | 10-1291077 | B1 | 01 August 2013 |
| | | | | KR | 10-1378132 | B1 | 27 March 2014 |
| | | | | KR | 10-2011-0089252 | A | 05 August 2011 |
| | | | | KR | 10-2013-0048263 | A | 09 May 2013 |
| | | | | TW | 201014244 | A | 01 April 2010 |
| | | | | US | 2010-0046455 | A1 | 25 February 2010 |
| | | | | US | 8274903 | B2 | 25 September 2012 |
| | | | | US | 9100887 | B2 | 04 August 2015 |
| | | | | WO | 2010-022256 | A2 | 25 February 2010 |
| | | | | WO | 2010-022256 | A3 | 15 April 2010 |
| | | | | WO | 2010-022256 | A8 | 31 March 2011 |
| US | 2013-0329693 | A1 | 12 December 2013 | KR | 10-1901935 | B1 | 05 November 2018 |
| | | | | KR | 10-2014-0017578 | A | 11 February 2014 |
| | | | | WO | 2012-115337 | A1 | 30 August 2012 |
| US | 2023-0075068 | A1 | 09 March 2023 | US | 10367761 | B2 | 30 July 2019 |
| | | | | US | 11431655 | B2 | 30 August 2022 |
| | | | | US | 2017-0310610 | A1 | 26 October 2017 |
| | | | | US | 2019-0386933 | A1 | 19 December 2019 |
| US | 2009-0168706 | A1 | 02 July 2009 | EP | 1936878 | A1 | 25 June 2008 |
| | | | | WO | 2008-077718 | A1 | 03 July 2008 |
| WO | 2023-277460 | A1 | 05 January 2023 | EP | 4256892 | A1 | 11 October 2023 |
| | | | | US | 2023-0337316 | A1 | 19 October 2023 |

Form PCT/ISA/210 (patent family annex) (July 2022)